# EUROPÄISCHE PATENTSCHRIFT

(11) **EP 3 894 717 B1**
(45) Veröffentlichungstag und Bekanntmachung des Hinweises auf die Patenterteilung: **30.10.2024**
(21) Anmeldenummer: 20706120.1
(22) Anmeldetag: 07.02.2020
(51) Int. Cl.: F16F 7/12, E04H 9/02

(54) **BAUWERKSDÄMPFER MIT WENIGSTENS EINEM ZUMINDEST BEREICHSWEISE LEITERARTIG AUSGEBILDETEN SCHUBDÄMPFUNGSTEIL**
BUILDING DAMPER HAVING AT LEAST ONE SHEAR-DAMPING PART WHICH IS OF LADDER-LIKE DESIGN AT LEAST IN CERTAIN REGIONS
AMORTISSEUR DE BÂTIMENT COMPRENANT AU MOINS UNE PIÈCE D'AMORTISSEMENT DE POUSSÉE RÉALISÉES AU MOINS PAR SECTION SOUS FORME D'ÉCHELLE

(30) Priorität: 08.02.2019 DE 102019201682
(43) Veröffentlichungstag der Anmeldung: 20.10.2021
(73) Patentinhaber: Maurer Engineering GmbH, 80807 München (DE)
(72) Erfinder: GANDELLI, Emanuele, 80807 München (DE); DISTL, Johann, 80807 München (DE)
(74) Vertreter: von Hirschhausen, Helge
(86) Internationale Anmeldenummer: PCT/EP2020/053123
(87) Internationale Veröffentlichungsnummer: WO 2020/161298

(56) Entgegenhaltungen:
- WO-A1-2011/086770
- WO-A1-97/04193
- JP-A- 2010 216 611
- JP-A- H02 217 634
- US-A- 4 272 114
- US-A1- 2012 017 523

## Beschreibung

Die vorliegende Erfindung betrifft einen Bauwerksdämpfer mit wenigstens einem zumindest bereichsweise leiterartig ausgebildeten Schubdämpfungsteil, das wenigstens zwei Längsträger aufweist, die über wenigstens zwei in einer ersten Ausrichtung parallel zueinander ausgerichtete sprossenartige Querträger miteinander verbunden sind, wobei die sprossenartigen Querträger jeweils an ihren Enden biegesteif mit den Längsträgern verbunden sind.

Bauwerksdämpferwerden verwendet um Bewegungsenergie, die von außen in ein Bauwerk (der Begriff soll breit verstanden werden und deckt unter anderem beliebige Gebäude, Brücken oder Türme ab) eingeleitet wird, abzubauen. Dies erfolgt in aller Regel durch Umwandlung der Bewegungsenergie in Wärmeenergie. Dieser auch als Dissipation bezeichnete Vorgang verhindert Schäden am Bauwerk in Folge solcher Beschleunigungseffekte und Bewegungen, wie sie zum Beispiel durch Erdbeben oder dergleichen entstehen können.

Es gibt bereits eine ganze Reihe von unterschiedlichen Bauwerksdämpfern, die die Dämpfungseigenschaften verschiedener Werkstoffe bzw. Systeme zur Dissipation nutzen. Ein vor allem aus dem Fahrzeugbau sehr weitgehend bekanntes Prinzip ist die Dämpfung mittels Hydrauliköl. Ein anderes, besonders für Bauwerke ökonomisch interessantes Prinzip ist die Nutzung der plastischen Verformung von Stahlblechen. Ein solches auf der Verformung von Stahlblechen basierendes Dämpfungssystem bezeichnet man heutzutage im Deutschen als Stahl-Hysterese-Dämpfer und im Englischen als "Steel Hysteretic Damper" (kurz SHD-Dämpfer).

Eine gängige Bauform eines solchen SHD-Dämpfers besteht im Prinzip aus langen dünnen Stahlblechen, die in der Art eines Fachwerkstabes so in der Konstruktion eines Bauwerks angeordnet werden, dass sie aufgrund des in Schwingung versetzten Bauwerks abwechselnd ausschließlich auf Zug- oder Druck belastet werden. Damit die relativ dünnen Bleche bei der hohen Normalkraftbelastung nicht ausknicken, weisen diese Dämpfer meist nicht nur einen einzelnen Blechstreifen sondern zusätzliche Aussteifungsmittel auf. So hat sich ein in der Draufsicht kreuzartiger Blech-Querschnitt etabliert, der zusätzlich in einem mit Mörtel ausgefüllten Hüllrohr angeordnet ist. das mit Mörtel gefüllte Hüllrohr verhindert das Ausbeulen bzw. Knicken des Blechstreifens unter der Last und stabilisiert diesen während er sich alternierend plastisch verformt. Das sich einstellende Last-Verformungs-Diagramm zeigt einen Verlauf in Form einer Hystereseschleife. Die Bauart eines SHD-Dämpfers mit einem gegen Beulen stabilisierten Fachwerkstab nennt man heute im Englischen "Buckling Restrained Brace" (kurz BRB-Dämpfer).

SHD-Dämpfer sind deutlich günstiger als Hydraulikdämpfer. Sie brauchen jedoch in aller Regel und speziell in der Bauform eines BRB-Dämpfers eine große Länge, damit sie die nötige Dämpfungswirkung entfalten können. Daher werden sie vor allem zur Dämpfung großer Gebäude eingesetzt, wo genügend Bauraum zu Verfügung steht. Ein weiterer bauartbedingter Nachteil besteht speziell bei BRB-Dämpfern darin, dass aufgrund der Aussteifungsmittel in der Regel das für die Dämpfungswirkung verantwortliche Innenleben der Dämpfer nicht zu sehen ist. Man kann also nur schwer von außen über den Zustand eines BRB-Dämpfers urteilen. Zudem führen die sehr großen Abmessungen von BRB-Dämpfern dazu, dass es sehr aufwendig ist, einen beschädigten BRB-Dämpfer nach einem Erdbeben zu ersetzen.

Ein herkömmlicher SHD-Dämpfer ist beispielsweise in US 4 272 114 A offenbart, wobei in der US 4 272 114 A ein zusätzlicher Schockabsorber innerhalb des SHD-Dämpfers angeordnet ist. Ein Erdbeben-Stoßdämpfer, der ebenfalls ein Dämpfungssystem basierend auf der Verformung von Stahlblechen basiert, ist in US 2004 135 056 A1 offenbart.

Es hat daher in der Vergangenheit immer wieder Untersuchungen gegeben, wie man die plastische Verformung von Stahl auf andere Art und Weise zur Dämpfung eines Bauwerks nutzen könnte. Ein schon vor mehr als 25 Jahren untersuchter Ansatz ist die Erzeugung von Scherkräften in sogenannten "Shear Hysteretic Panels" (kurz SHP-Dämpfer). Dies sind leiterartig ausgebildete, ebene Schubdämpfungsteile bei denen zwei Längsträger über wenigstens zwei (meist jedoch deutlich mehr als zwei) biegesteif angebundene Querträger miteinander in Verbindung stehen. Die Dämpfung erfolgt so, dass in einen der beiden Längsträger eine Normalkraft eingebracht wird, die über die durch Schubkraft verformten Querträger gedämpft in den anderen Längsträger übertragen wird. Kommt es zu einer Pendelbewegung wird die in den Längsträger eingeleitete Normalkraft abwechselnd eine Zug- bzw. eine Druckkraft sein, die über die plastische Verformung der zwischengeschalteten Querträger abgebaut wird. Auch hier stellt sich eine Last-Verformungs-Kurve mit einem Verlauf in Form einer Hystereseschleife ein.

Allerdings kann es auch bei dieser Bauart leicht zu einem Ausknicken der Querträger kommen. Zudem kann ein solcher SHP-Dämpfer nur eine äußerst kleine Verformung aufnehmen, die insbesondere nicht den Einsatz zur Dämpfung von Erdbeben in großen und hohen Bauwerken erlaubt. Zudem nehmen die Probleme des Beulens und Knickens der Querträger mit größer werdenden Verformungen noch zu. In der Folge hat man daher die Untersuchungen an SHP-Dämpfern eingestellt und es ist nicht zur praktischen Anwendung solcher SHP-Dämpfer zur Bauwerksdämpfung gekommen.

Aufgabe der Erfindung ist es daher einen Bauwerksdämpfer anzugeben, der weniger Bauraum benötigt als ein BRB-Dämpfer zugleich aber auch die den SHP-Dämpfern eigenen Einschränkungen hinsichtlich des Verformungsweges und der Ausknickproblematik nicht aufweist.

Die Lösung dieser Aufgabe gelingt mit einem Bauwerksdämpfer mit wenigstens einem zumindest bereichsweise leiterartig ausgebildeten Schubdämpfungsteil, das wenigstens zwei Längsträger aufweist, die über wenigstens zwei in einer ersten Ausrichtung parallel zueinander ausgerichtete sprossenartige Querträger miteinander verbunden sind, wobei die sprossenartigen Querträger jeweils an ihren Enden biegesteif mit den Längsträgern verbunden sind, wobei das Schubdämpfungsteil erfindungsgemäß eine räumliche Struktur aufweist, bei der wenigstens zwei weitere sich parallel zu einander erstreckende, sprossenartige Querträger in einer von der ersten Ausrichtung abweichenden zweiten Ausrichtung angeordnet sind. Wenigstens ein Schubdämpfungsteil weist wenigstens ein Krafteinleitungsmittel auf. Wenigstens ein Krafteinleitungsmittel ist als flache Platte mit einem u-förmigen Ausschnitt ausgestaltet, dessen Schenkel das Schubdämpfungsteil seitlich umfassen und an dessen Schenkelenden ein die beiden Schenkelenden verbindender Lasteinleitungsträger angeordnet ist, der mit den Enden zweier Längsträger verbunden ist. Der Lasteinleitungsträger wird also nach Einbringung des Krafteinleitungsmittels an den Schenkelenden auf geeignete Weise befestigt, beispielsweise angeschweißt.

Die Idee der Erfindung liegt also darin, das zur Dämpfung von Bauwerken in der Fachwelt eigentlich schon abgeschriebene Prinzip der Dämpfung mittels Scherkräften in leiterartig ausgestalteten Schubdämpfungsteilen wieder aufzugreifen. Dem liegt wiederum die Erkenntnis zugrunde, dass man das Beulen in den Griff bekommen kann und dass gerade die leiterartige Struktur des Schubdämpfungsteils ein sehr gut an unterschiedliche Anforderungen anpassbares Grundlayout bietet.

So wird erfindungsgemäß das bei SHP-Dämpfern bislang plattenförmig gestaltete Schubdämpfungsteil herkömmlicher Bauweise in eine gegenüber Beulen bzw. Ausknicken deutlich besser stabilisierte, räumliche Struktur überführt. Diese räumliche Struktur wird durch das Vorsehen zusätzlicher sprossenartiger Querträger erzeugt, die in einer von der Ausrichtung der ersten sprossenartigen Querträgern abweichenden zweiten Ausrichtung angeordnet werden. Zudem kann durch die Steigerung der Zahl an Querträgern bei gleicher Länge der Längsträger eine Erhöhung der maximal aufzunehmenden Kräfte erreicht werden. Das Ergebnis ist ein im Vergleich zu herkömmlichen SHP-Dämpfern deutlich verbessertes Knickverhalten bei insgesamt größeren maximal aufnehmbaren Kräften.

Weiterbildend weist das Schubdämpfungsteil mehrere Querträger-Ebenen mit wenigstens einem darin angeordneten Querträger auf, wobei die Querträger-Ebenen entlang der Längsachse des Schubdämpfungsteils parallel beabstandet angeordnet sind. Anders ausgedrückt werden entlang der Längsachse des Schubdämpfungsteils mehrere parallele Querträgerebenen aufgespannt, in denen mindestens ein Querträger angeordnet ist. Die parallele Anordnung der Querträger-Ebenen führt dazu, dass alle Querträger gemeinsam eine Ausrichtung aufweisen, die dazu führt, dass sie allesamt in einer quer zu der Querträgerebene verlaufenden Wirkrichtung auf Schub beansprucht werden können.

Weiterbildend sind in jeder Querträger-Ebene wenigstens zwei Querträger angeordnet, von denen zumindest ein Querträger sich in der ersten Ausrichtung und ein weiterer Querträger sich in der zweiten Ausrichtung erstreckt. So können sich die Querträger gegenseitig in der jeweiligen Querträgerebene aussteifen.

Bevorzugt sind mehrere Querträgerebenen in einem gleichen Abstand zueinander entlang der Längsachse des Schubdämpfungsteils angeordnet. Dies vereinheitlicht die Kraftverteilung und vereinfacht die Herstellung.

Dementsprechend können im Schubdämpfungsteil mindestens zwei Querträger-Ebenen mit jeweils wenigstens zwei, vorzugsweise vier, darin angeordneten Querträger(n) vorgesehen sein. Über die Zahl der Querträger lässt sich die maximale Kraft, die in den Bauwerksdämpfer eingeleitet werden kann, steuern. Je höher die maximal aufzunehmenden Kräfte sind, umso mehr Querträger bzw. Querträgerebenen müssen vorgesehen werden. Insofern ist die Zahl möglicher Querträgerebenen auch nicht nach oben begrenzt. So ergibt sich erfindungsgemäß ein in Bezug auf die aufzunehmenden maximalen Verformungen sehr gut einstellbarer Bauwerksdämpfer.

Bevorzugt besteht das Schubdämpfungsteil zumindest teilweise aus Metall. Insbesondere eine Ausführung des Schubdämpfungsteils aus Stahl hat große Vorteile dahingehend, dass Stahl ein in diesem Anwendungsgebiet bereits weit verbreitetes und damit gut in Bezug auf sein Materialverhalten ausgeforschtes Material ist. Stahl lässt sich gut und wiederholt plastisch verformen.

Weiterbildend weist wenigstens ein, vorzugsweise weisen alle Querträger eine zu beiden Enden hin zunehmende Stärke auf. So wird die Anbindung der Querträger an die Längsträger besonders biegesteif. Es können daher sehr große Schubkräfte in die Querträger eingeleitet werden.

Weiterbildend weist das Schubdämpfungsteil einen in Draufsicht auf seine Längsachse symmetrischen, mehreckigen und/oder runden Grundriss auf. Eine solche Gestaltung des Grundrisses des räumlich ausgebildeten Schubdämpfungsteils sorgt für eine besonders gute, auch Torsionskräfte abdeckende Aussteifung der unterschiedlichen Querträger untereinander.

Weiterbildend weist das Schubdämpfungsteil wenigstens drei vorzugsweise vier Längsträger auf. So kann das Schubdämpfungsteil in der Draufsicht auf seine Längsachse einen dreieckigen oder viereckigen Grundriss aufweisen.

Dabei ist es sinnvoll, wenn die Längsträger des Schubdämpfungsteils in den Ecken eines Schubdämpfungsteils mit mehreckigem Grundriss angeordnet sind. So kann ein Längsträger zur Befestigung von Querträgern zweier unterschiedlicher Ausrichtungen dienen. Ein derart gestalteter Bauwerksdämpfer ist also besonders effizient.

Weiterbildend ist es vorstellbar, dass die Längsträger und die Querträger des Schubdämpfungsteils miteinander verschweißt sind, insbesondere, wenn diese aus Metall bestehen. Die Verschweißung sorgt für eine besonders steife Verbindung von Längs- und Querträgern.

Alternativ oder aber auch ergänzend kann das Schubdämpfungsteil zumindest eine längliche Platte aufweisen, die mehrere parallele und quer zur Längsachse der Platte verlaufende Schlitze aufweist. So entsteht eine zumindest bereichsweise ebene, leiterartige Struktur, die sehr einfach herzustellen ist, zugleich aber auch mehrere durch die Schlitze erzeugte Querträger aufweist.

Bevorzugt weist das Schubdämpfungsteil mehrere in Draufsicht auf seine Längsachse zueinander angewinkelt angeordnete, mehrfach geschlitzte Platten auf. So kann das Schubdämpfungsteil insgesamt aus mehreren geschlitzten Platten aufgebaut werden, was eine besonders einfache Herstellung ermöglicht.

Bei den Platten kann es sich auch um L-förmig ausgebildete Profile handeln, deren Schenkelplatten jeweils mehrfach geschlitzt sind. Ein solches L-förmiges Profil lässt sich leicht bearbeiten und ist kostenmäßig in der Herstellung auch von großer Effizienz geprägt.

Denkbar ist aber auch, dass das Schubdämpfungsteil ein Rohr aufweist, bei dem in wenigstens einer Rohrwand mehrere parallele und quer zur Längsachse des Rohres verlaufende Schlitze so angeordnet und ausgeführt sind, dass in Längsrichtung des Rohres wenigstens zwei durchgehende Wandabschnitte vorhanden sind. Diese durchgehenden Wandabschnitte bilden die Längsträger des Schubdämpfungsteils, während die quer zur Längsachse verlaufenden Wandabschnitte zwischen den Schlitzen die sprossenartigen Querträger bilden.

In der einfachsten Ausprägung ist es denkbar, dass man ein zylindrisches Rohr aus Stahl als Ausgangsprodukt verwendet und dieses beispielsweise beidseitig mehrfach schlitzt, sodass zwei Längsträger und links und rechts von diesen Längsträgern jeweils links herum bzw. rechts herum führende Querträger entstehen, die dann in einer Rohrlängsachse aufgebrachten Zugdruckbewegungen auf Schub hin diese Bewegung dämpfend aufnehmen. Da bei dieser einfachsten Ausführungsform jedoch relativ große Längen der Querträger entstehen können, kann es sinnvoll sein, die Länge der Schlitze zu verkürzen und so die Breite der Längsträger zu vergrößern.

Alternativ können die Schlitze jeweils kürzer und dafür in größerer Anzahl vorgesehen werden. So kann das Rohr in vier Viertelkreissegmente unterteilt werden. In jedem Segment ist wenigstens ein nicht das ganze Segment abdeckender Schlitz angeordnet. Werden mehrerer solcher Schlitze parallel entlang der Längsachse angeordnet, entstehen vier ungeschlitzte Bereiche, die sich entlang der Längsachse erstrecken und die jeweils einen Längsträger bilden. So kann auf relativ einfache Art und Weise aus einem Rundrohr ein Schubdämpfungsteil mit vier Längsträgern und vielen in gleichen Ebenen angeordneten Querträgern erzeugt werden.

Weiterbildend ist wenigstens eine Rohrwand zumindest teilweise eben und/oder gekrümmt ausgeführt. Auch kann das Rohr einen in Draufsicht auf seine Längsachse runden und/oder mehreckigen Querschnitt haben. Insbesondere Vierkantrohre haben große fertigungstechnische Vorteile und können sehr gut zur Umsetzung der Erfindung herangezogen werden. Hier ergeben sich auf besonders einfache Weise ebene und in Bezug auf ihr Dämpfungsverhalten gut auszulegende leiterartige Rohrwandabschnitte.

Weiterbildend weist wenigstens ein Schubdämpfungsteil wenigstens ein spangenartig ausgebildetes Krafteinleitungsmittel auf. Dieses kann wenigstens die Enden zweier nichtbenachbarter Längsträger eines Schubdämpfungsteils verbinden. Unter nicht benachbarten Längsträgern sollen die Längsträger verstanden werden, die in der gleichen Richtung mit Zug bzw. Druck beaufschlagt werden, während unter benachbarten Längsträger solche Längsträger zu verstehen sind, die über Querträger mit dem jeweiligen Längsträger verbunden und damit in jeweils entgegengesetzter Richtung belastet werden. Praktisch wird so wenigstens ein Längsträger vom Krafteinleitungsmittel überbrückt. Aufgrund des Krafteinleitungsmittels erfolgt die Krafteinleitung dennoch gleichmäßig in die beiden jeweils angrenzenden Längsträger.

Weiterbildend ist bei einem im Grundriss viereckig ausgebildeten Schubdämpfungsteil wenigstens ein erstes Krafteinleitungsmittel an den zwei sich auf einer Seite befindlichen Enden zweier diagonal gegenüberliegender, nicht benachbarter Längsträger befestigt. Ein zweites Krafteinleitungsmittel ist dann an den zwei sich auf der anderen Seite befindlichen Enden der beiden anderen Längsträger diagonal befestigt. Die beiden Krafteinleitungsmittel sind somit um 90° verdreht zueinander am Bauwerksdämpfer beziehungsweise am Schubdämpfungsteil angeordnet. Dies führt dazu, dass sich die beiden Krafteinleitungsmittel auch im bewegten Zustand nicht behindern. Und das selbst dann nicht, wenn sie so ausgebildet sind, dass sie das Schubdämpfungsteil zumindest teilweise umgreifen.

Sinnvollerweise weist wenigstens ein Krafteinleitungsmittel ein Befestigungsmittel auf, das seinerseits vorzugsweise eine Bohrung zur Anbringung beziehungsweise Befestigung des Bauwerksdämpfers am Bauwerk aufweist, wobei die Bohrung auf der dem Lasteinleitungsträger gegenüberliegenden Seite des Krafteinleitungsmittels angeordnet ist.

Weiterbildend sind wenigstens zwei Schubdämpfungsteile mittels wenigstens eines Verbindungsmittels verbunden. So kann ein modulförmiger Aufbau erzeugt werden, bei dem je nach benötigter maximaler Dämpfungswirkung mehrere Schubdämpfungsteile über solche Verbindungsmittel miteinander in eine Wirkverbindung gebracht werden. Werden zum Beispiel zwei gleich gestaltete Schubdämpfungsteile mit einander verbunden, erlaubt dies die Verdoppelung der maximal aufnehmbaren Verformungen im Vergleich zu einer Ausführungsform mit nur einem derartig gestalteten Schubdämpfungsteil.

Gerade die Hintereinanderschaltung von mehreren erfindungsgemäß gestalteten Schubdämpfungsteilen ermöglicht eine für die Bauwerksdämpfung von Erdbeben so wichtige Aufnahmefähigkeit großer Verformungswege und das bei großer Beul- und Knickstabilität. Dabei kann gerade durch Verwendung mehrerer gleichartig aufgebauter Schubdämpfungsteile ein modulartiger Aufbau geschaffen werden, der große fertigungstechnische Vorteile bietet. So kann mit relativ wenig Aufwand ein gut an unterschiedlichste Bedingungen anpassbarer Dampfer geschaffen werden. Es müssen nur je nach Einsatzbedingungen genügend viele Schubdämpfungsteile miteinander verbunden werden. Auf diese Weise gelingt es insbesondere auch, die bislang für unüberwindbar erachteten Nachteile der geringen Verformungskapazitäten herkömmlicher SHP-Dämpfer zu überwinden.

Auch ist es sinnvoll, wenn wenigstens ein Schubdämpfungsteil ein von dem oder den anderen Schubdämpfungsteil(en) abweichende Dämpfungswirkung aufweist. Das kann zum Beispiel darüber erfolgen, dass es eine abweichende Zahl von Querträgern aufweist. So kann die Dämpfungswirkung des Bauwerksdämpfer sehr genau auf die erwarteten zu dämpfenden Lasten eingestellt werden.

Weiterbildend sind zwei unterschiedlich steife Schubdämpfungsteile so miteinander verbunden, dass bei einem kleinen Erdbeben nur das weniger steife Schubdämpfungsteile aktiviert wird und bei einem großen Erdbeben sowohl das steifere wie auch das weniger steife Schubdämpfungsteil aktiviert werden. So können durch die Hintereinanderschaltung unterschiedlicher Schubdämpfungsteile die Dämpfungseigenschaften des Bauwerksdämpfers gezielt auf unterschiedlich starke Erdbebenlasten ausgelegt werden.

Alternativ sind wenigstens zwei unterschiedlich steife Schubdämpfungsteile so miteinander verbunden, dass bei einem kleinen Erdbeben nur das weniger steife Schubdämpfungsteile aktiviert wird und bei einem großen Erdbeben nur das steifere Schubdämpfungsteil (5) aktiviert wird. Dies führt zu einer Glättung der Hysteresekurve, also der Dämpfungseigenschaften, des Bauwerksdämpfers im Last-Verfomungsdiagramm.

Damit die Aktivität eines Schubdämpfungsteils gezielt beeinflussen werden kann, weist wenigstens ein Verbindungsmittel ein Schließsystem zur Begrenzung und/oder Unterdrückung von Bewegungen wenigstens eines in ihm angeordneten Schubdämpfungsteils aufweist.

Weiterbildend weist das Verbindungsmittel zwei u-förmige Ausschnitte auf, deren Schenkel jeweils ein Schubdämpfungsteil seitlich umfassen und an dessen Schenkelenden jeweils ein die beiden Schenkelenden verbindender Lasteinleitungsträger angeordnet ist, der mit den Enden zweier nicht benachbarter Längsträger des jeweiligen Schubdämpfungsteils verbunden ist. Auch das Verbindungsmittel überbrückt also mit anderen Worten den jeweiligen benachbarten Längsträger.

Nachfolgend wird die Erfindung anhand von in den Zeichnungen gezeigten Ausführungsbeispielen näher erläutert. Darin zeigen schematisch:
- Fig. 1: einen aus dem Stand der Technik bekannten BRB-Dämpfer;
- Fig. 2: einen aus dem Stand der Technik bekannten SHP-Dämpfer;
- Fig. 3: ein erstes Ausführungsbeispiel eines Schubdämpfungsteils eines erfindungsgemäßen Bauwerksdämpfers;
- Fig. 4a: den in Fig. 3 gezeigten Schnitt A-A;
- Fig. 4b: den in Fig. 3 gezeigten Schnitt B-B;
- Fig. 5: ein zweites Ausführungsbeispiel eines Schubdämpfungsteils eines erfindungsgemäßen Bauwerksdämpfers;
- Fig. 6a: den in Fig. 5 gezeigten Schnitt A-A;
- Fig. 6b: den in Fig. 5 gezeigten Schnitt B-B;
- Fig. 7: ein drittes Ausführungsbeispiel eines Schubdämpfungsteils eines erfindungsgemäßen Bauwerksdämpfers;
- Fig. 8a: den in Fig. 7 gezeigten Schnitt A-A;
- Fig. 8b: den in Fig. 7 gezeigten Schnitt B-B;
- Fig. 9a: einen Fig. 8a entsprechenden Schnitt A-A durch ein viertes Ausführungsbeispiel eines Schubdämpfungsteils eines erfindungsgemäßen Bauwerksdämpfers;
- Fig. 9b: einen Fig. 8b entsprechenden Schnitt B-B durch ein viertes Ausführungsbeispiel eines Schubdämpfungsteils eines erfindungsgemäßen Bauwerksdämpfers;
- Fig. 10a: ein Ausführungsbeispiel für einen Querträger mit konstanter Höhe;
- Fig. 10b: ein Ausführungsbeispiel für einen Querträger mit zu den Trägerenden zunehmender Trägerhöhe;
- Fig. 10c: ein weiteres alternatives Ausführungsbeispiel für einen Querträger mit zu den Trägerenden zunehmender Trägerhöhe;
- Fig. 11: ein fünftes Ausführungsbeispiel eines erfindungsgemäßen Bauwerksdämpfers;
- Fig. 12: den in Fig. 11 gezeigten Schnitt C-C mit Darstellung der internen Kraftverteilung
- Fig. 13: eine Seitenansicht eines Teils der in Fig. 11 gezeigten Seitenwand des bereichsweise leiterartig ausgebildeten Schubdämpfungsteils im verformten Zustand;
- Fig. 14: ein Kraft-Verformungsdiagramm mit Darstellung eines bilinear modellierten Verformungsverhaltens eines erfindungsgemäßen Bauwerksdämpfers;
- Fig. 15: das rechnerisch ermittelte Verformungsverhalten des in Fig. 11 gezeigten erfindungsgemäßen Bauwerksdämpfers;
- Fig. 16a: ein erstes Ausführungsbeispiel für ein aus mehreren Teilen zusammengeschweißtes Schubdämpfungsteil;
- Fig. 16b: ein zweites Ausführungsbeispiel für ein aus mehreren Teilen zusammengeschweißtes Schubdämpfungsteil;
- Fig. 16c: ein drittes Ausführungsbeispiel für ein aus mehreren Teilen zusammengeschweißtes Schubdämpfungsteil;
- Fig. 17: ein sechstes Ausführungsbeispiel eines erfindungsgemäßen Bauwerksdämpfers mit zwei quadratrohrförmigen Schubdämpfungsteilen;
- Fig. 18: ein siebtes Ausführungsbeispiel eines erfindungsgemäßen Bauwerksdämpfers mit drei quadratrohrförmigen Schubdämpfungsteilen;;
- Fig. 19: ein achtes Ausführungsbeispiel eines erfindungsgemäßen Bauwerksdämpfers mit zwei unterschiedlich ausgebildeten quadratrohrförmigen Schubdämpfungsteilen, wobei eines weniger Querträgerebenen als das andere hat;
- Fig. 20: einen Schnitt durch das in Fig. 19 gezeigte Ausführungsbeispiel;
- Fig. 21: einen vergrößerten Ausschnitt des in Fig. 20 gezeigten Schnitts;
- Fig. 22a: das mechanische System des in Fig. 19 gezeigten Ausführungsbeispiels mit Lückenverbindungssystem;
- Fig. 22b: das mechanische System eines gem. Fig. 19 gestalteten Ausführungsbeispiels das zusätzlich ein Schließsystem für eines der beiden Schubdämpfungsteile aufweist;
- Fig. 23: das multilinear modellierte Verformungsverhalten des in Fig. 19 gezeigten erfindungsgemäßen Bauwerksdämpfers; und
- Fig. 24a: das rechnerisch ermittelte Verformungsverhalten eines gemäß Fig. 22a ausgebildeten Bauwerksdämpfers mit einem Lückenverbindungssystem;
- Fig. 24b: das rechnerisch ermittelte Verformungsverhalten eines gemäß Fig. 22b ausgebildeten Bauwerksdämpfers mit einem Schließsystem;
- Fig. 25a: ein erstes Beispiel wie ein erfindungsgemäßer Bauwerksdämpfer in einem Bauwerk eingebaut werden kann;
- Fig. 25b: ein zweites Beispiel wie ein erfindungsgemäßer Bauwerksdämpfer in einem Bauwerk eingebaut werden kann; und
- Fig. 25c: ein drittes Beispiel wie ein erfindungsgemäßer Bauwerksdämpfer in einem Bauwerk eingebaut werden kann.

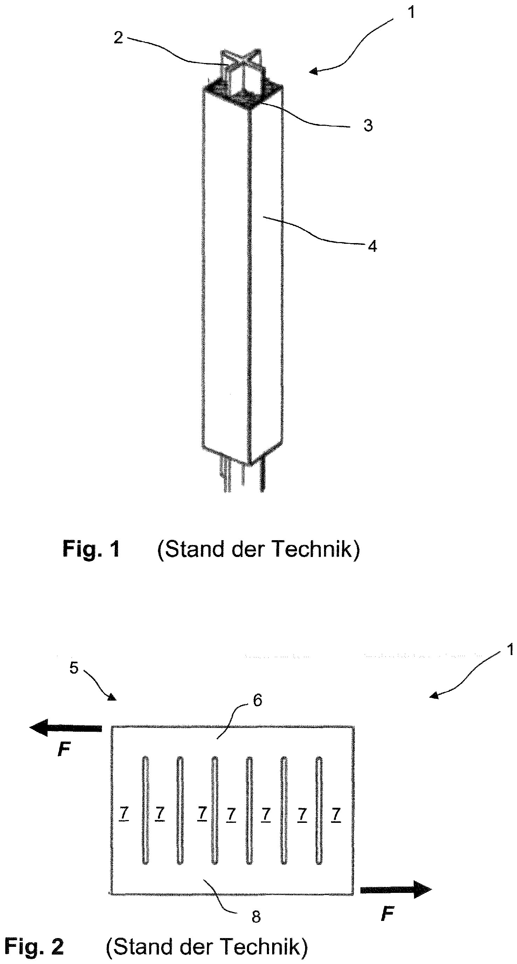

Der in Fig. 1 gezeigte Bauwerksdämpfer 1 ist ein herkömmlicher BRB-Dämpfer, bei dem ein Stahlträger 2 mit kreuzförmigem Querschnitt in einem mit Mörtel 3 gefüllten Rohr 4 angeordnet ist. Die Reibung zwischen Stahlträger 2 und Mörtel 3 wird durch eine zwischen diesen beiden angeordnete Schmiermittelschicht reduziert, sodass sich der Stahlträger 2 innerhalb des Mörtels 3 relativ frei in Längsrichtung verformen kann.

Kommt es zu einem Erdbeben, wird eine Normalkraft in den Bauwerksdämpfer 1 eingeleitet unter der sich der Stahlträger 2 zunächst elastisch und nach Überschreiten der Fließgrenze plastisch verformt. Die plastische Verformung dauert solange an, bis sich die schwingende Bewegung des Bauwerks umkehrt. Nach einer zunächst elastischen Verformung kommt es wieder zum Fließen, und zwar solange bis sich die Pendelbewegung des Bauwerks erneuten umkehrt und es in anderer Richtung zur Bewegung des Bauwerks kommt. Beim Fließen des Stahlträgers 2 wird ein Teil der Bewegungsenergie in Wärmeenergie umgewandelt. Durch diese Dämpfung wird die Pendelbewegung des Bauwerks nach und nach abgebaut.

In Fig. 2 ist ein Bauwerksdämpfer 1 gezeigt, wie er im Stand der Technik als sogenannter SHP-Dämpfer bekannt ist. Dieser weist ein ebenes, leiterartiges Schubdämpfungsteil 5 auf, das wenigstens zwei Längsträger 6 und 8 aufweist, die ihrerseits über wenigstens zwei, vorliegend sieben, Querträger 7 miteinander schubfest verbunden sind. Das Wirkprinzip sieht so aus, dass aufgrund einer in das Bauwerk eingebrachten Einwirkung (z.B. Anpralllast oder Erdbebenlast) eine Kraft F in den der Längsträger 6 eingeleitet wird und von dort über die biegefest verbundenen Querträger 7 in den vorliegend unterhalb gelegenen zweiten Längsträger 8 eingeleitet werden. Die Dämpfung erfolgt also über die durch Schubkräfte erzeugte plastische Verformung der Querträger 7.

Wie bereits vorstehend erläutert, hat sich gezeigt, dass das ebene, leiterartige Schubdämpfungsteil 5 eines SHP-Dämpfers sehr empfindlich gegenüber Knicken der Querträger 7 ist und in der Regel auch nicht genügend Dämpfungswirkung entfaltet, um in großen und hohen Gebäuden zur Dämpfung von Erdbebenlasten eingesetzt zu werden.

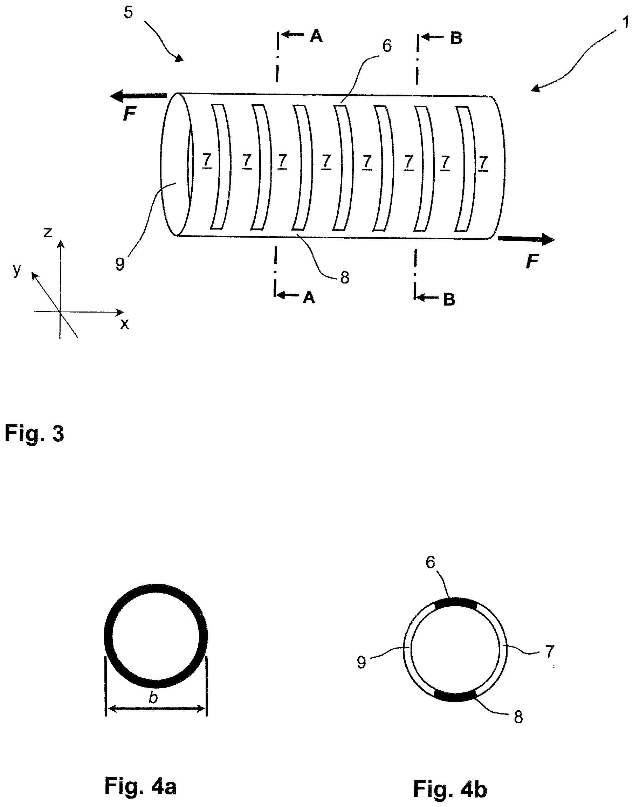

Der erfindungsgemäße Lösungsansatz zeigt sich in dem in Fig. 3, Fig. 4a und Fig. 4b gezeigten ersten Ausführungsbeispiel eines Schubdämpfungsteils 5 eines erfindungsgemäßen Bauwerkdämpfers 1. Das Schubdämpfungsteil 5 weist eine räumliche Struktur auf, bei der sich wenigstens zwei (vorliegend acht) Querträger 7 in einer ersten Ausrichtung 7 (in Fig. 4b ausgehend vom Längsträger 6 rechtsherum nach unten gekrümmt) erstrecken und wenigstens zwei (vorliegend acht) weitere zueinander parallel angeordnete sprossenartige Querträger 9 sich in einer von der ersten Ausrichtung abweichenden zweiten Ausrichtung (in Fig. 4b ausgehend vom Längsträger 6 linksherum nach unten gekrümmt) erstrecken. Mithilfe dieser räumlichen Gestaltung des Schubdämpfungsteils 5 gelingt es den Hauptnachteil herkömmlicher SHP-Dämpfer zu überwinden, nämlich die stark begrenzte Verformungsfähigkeit der Querträger bevor es überhaupt zum Beulen der Querträger kommt.

Das Schubdämpfungsteil 5 hat eine insgesamt längliche Gestalt. Seine Längsrichtung erstreckt sich vorliegend in x-Richtung in der sich auch die beiden Längsträger 6 und 8 erstrecken. Insofern wird die in den Bauwerksdämpfer 1 einzuleitende horizontale Kraft F in den ersten Längsträger 6 eingeleitet und über die Querträger 7 der ersten und die Querträger 9 der zweiten Ausrichtung in den zweiten Längsträger 8 eingeleitet und aufgrund der Verformung der Querträger 7 bzw. 9 in gedämpfter Form aus dem Schubdämpfungsteil 5 bzw. dem Bauwerksdämpfer 1 in das Bauwerk wieder eingeleitet.

Wie man insbesondere den Schnittdarstellungen der Fig. 4a und Fig. 4b entnehmen kann, hat das Schubdämpfungsteil 5 einen in der Draufsicht auf seine Längsachse kreisförmigen Querschnitt. Es kann also auch als mehrfach geschlitztes Rundrohr mit kreisförmigem Querschnitt und dem Außendurchmesser b und einer Dicke t beschrieben werden.

Somit erstrecken sich die Längsachsen der gekrümmten Querträger 7 und 9 in einer zur y-z Ebene jeweils parallelen Ebene. Nummeriert man die Querträgerebenen in Fig. 3 von links nach rechts, verläuft die erste Querträgerebene des Schubdämpfungsteils 5 parallel zur y-z-Ebene als erste Ebene. Dieser ersten Querträgerebene folgen von links nach rechts gesehen sieben weitere Querträgerebenen in denen jeweils ein Querträger 7 der ersten Ausrichtung und ein Querträger 9 der zweiten Ausrichtung angeordnet sind. Insofern weist der in Fig. 3 gezeigte Bauwerksdämpfer 1 ein Schubdämpfungsteil 5 mit acht Querträgerebenen und 16 Querträgern 7, 9 auf. Die Querträgerebenen sind in dem hier gezeigten Ausführungsbeispiel alle in gleichem Abstand zueinander entlang der sich in x- Richtung erstreckenden Längsachse des Schubdämpfungsteils 5 angeordnet.

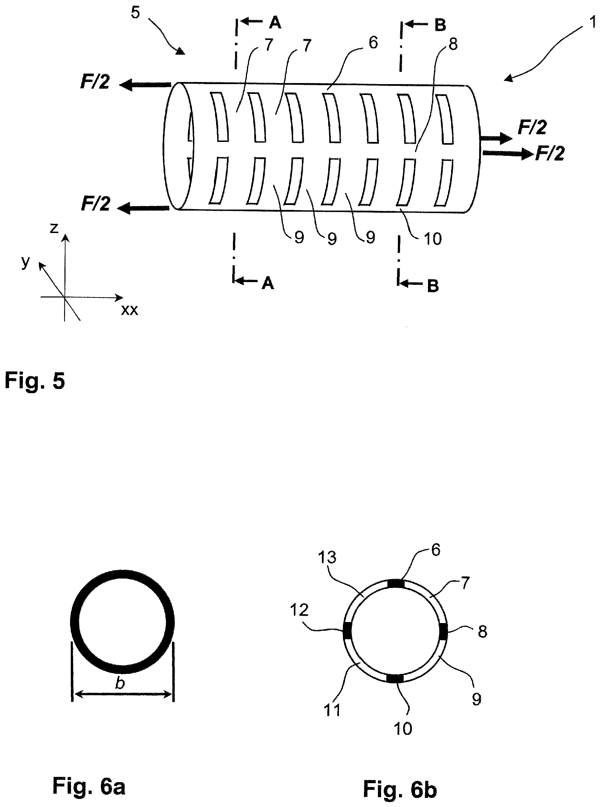

Das in Fig. 5, Fig. 6a und Fig. 6b gezeigte zweite Ausführungsbeispiel eines Schubdämpfungsteils 5 eines erfindungsgemäßen Bauwerkdämpfers 1 unterscheidet sich von dem ersten Ausführungsbeispiel dadurch, dass hier vier zueinander parallele Längsträger 6, 8, 10 und 12 und jeweils vier Querträger 7, 9, 11 und 13 in jeder der acht Querträgerebenen angeordnet sind. Somit kann bei gleicher Gesamtlast *F* die in die jeweiligen Längsträger 6, 8, 10, 12 eingeleitete Kraft im Vergleich zur ersten Ausführungsbeispiel halbiert (F/2) werden.

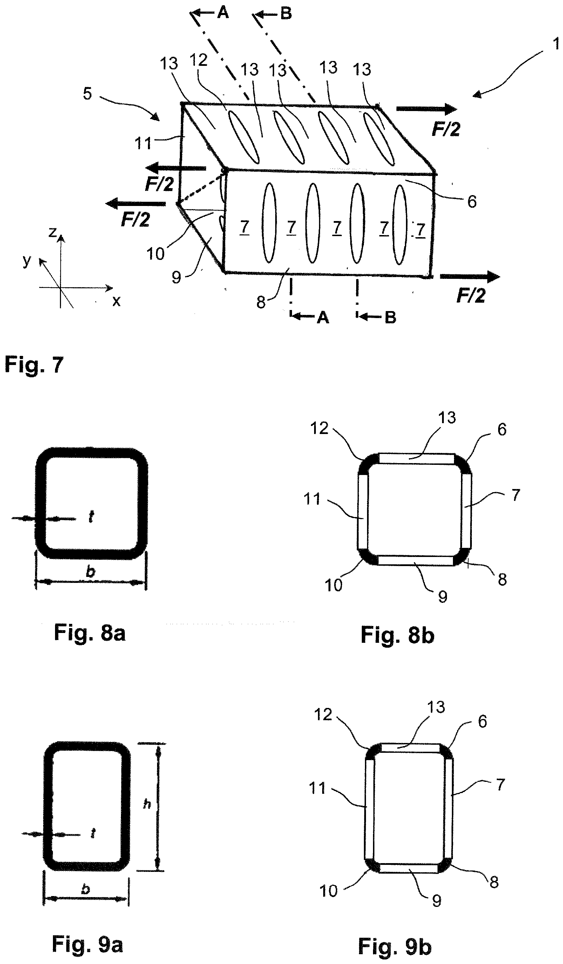

Das in Fig. 7, Fig. 8a und Fig. 8b gezeigte dritte Ausführungsbeispiel eines Schubdämpfungsteils 5 eines erfindungsgemäßen Bauwerkdämpfers 1 unterscheidet sich neben der geringeren Anzahl an Querträgerebenen (fünf statt acht) von den ersten beiden Ausführungsbeispielen vor allem dadurch, dass das Schubdämpfungsteil 5 einen in der Draufsicht auf dessen Längsachse im Wesentlichen quadratischen Grundriss aufweist. Das Schubdämpfungsteil 5 hat also statt der gekrümmten nun jeweils vier gerade Querträger 7, 9, 11, 13 pro Querträgerebene. Es kann also auch als mehrfach an den Seitenwänden geschlitztes Rohr der Dicke t mit quadratischem Querschnitt und der Außenbreite b beschrieben werden.

Wie man insbesondere Fig. 8b entnehmen kann, befinden sich bei dem hier gezeigten Ausführungsbeispiel die vier Längsträger 6, 8, 10, 12 jeweils in den Ecken des Rohres bzw. des Schubdämpfungsteils 5. Dies hat Vorteile in der Fertigung. Es führt aber auch zu einem einfacher zu steuernden Verformungsverhalten des Schubdämpfungsteils 5.

Alternativ zu einem quadratischen Grundriss ist es aber auch denkbar einen rechteckigen Grundriss für das Schubdämpfungsteil 5 zu verwenden, wie dies beispielhaft anhand der in Fig. 9a und Fig.9b gezeigten Schnitte dargestellt ist. So können unterschiedliche Steifigkeiten des Schubdämpfungsteils 5 erzeugt werden.

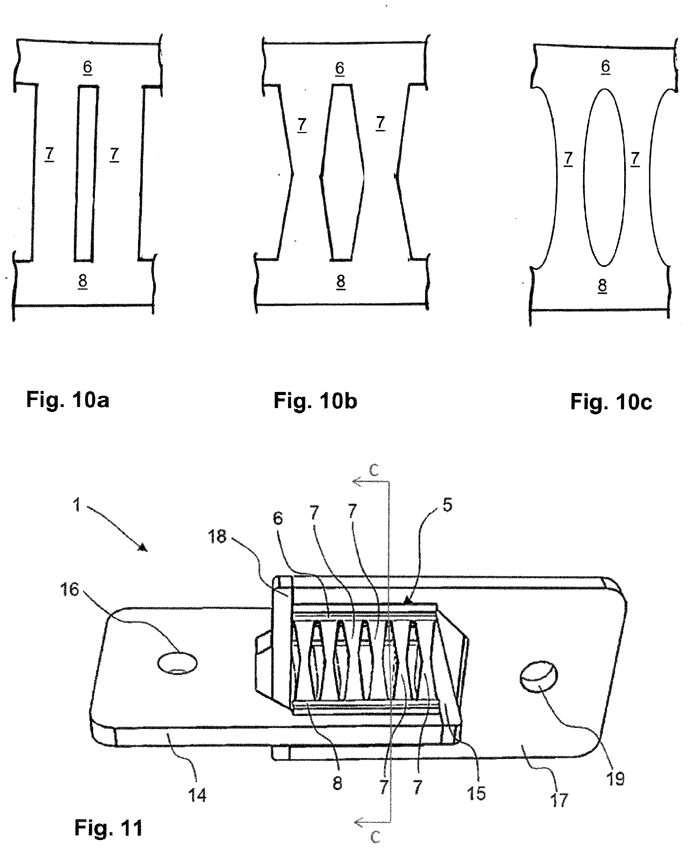

Die Steifigkeit des Schubdämpfungsteils 5 kann auch über die Formgebung der Höhe der Querträger gesteuert werden. So ist es denkbar Querträger 7 mit konstanter Höhe zu verwenden, wie dies in Fig. 10a gezeigt ist. Als besonders geeignet haben sich aber Formen gezeigt, bei denen die Querträger 7 an ihren Enden eine zunehmende Höhe aufweisen, wie sie in Fig. 10b oder in Fig. 10c gezeigt ist.

Bei dem in Fig. 11 gezeigten fünften Ausführungsbeispiel eines erfindungsgemäßen Bauwerksdämpfers 1 handelt es sich um eine Ausführungsform, bei der das Schubdämpfungsteil 5 im Prinzip so aufgebaut ist, wie das in Fig. 7 gezeigte dritte Ausführungsbeispiel. Auch hier hat das Schubdämpfungsteil 5 einen in der Draufsicht quadratischen Grundriss. Allerdings weist es sechs statt fünf Querträgerebenen auf. In jeder der Querträgerebenen sind genau wie im dritten Ausführungsbeispiel jeweils vier unterschiedlich ausgerichtete, ebene Querträger 7, 9, 11, 13 angeordnet. Die Querträger 7, 9, 11, 13 weisen ihrerseits eine Form auf, wie sie in Fig. 10b gezeigt ist. Sie haben also alle eine zu den Trägerenden hin zunehmender Trägerhöhe.

Die Krafteinleitung erfolgt hier mittels zweier platten- und spangenartig ausgebildeter Krafteinleitungsmittel 14 bzw. 17, die jeweils eien Bohrung 16 bzw. 19 zur Befestigung am Bauwerk und damit zur Krafteinleitung in den Bauwerksdämpfer 1 aufweisen. Die beiden Krafteinleitungsmittel 14 bzw. 17 sind zueienander um 90° gedreht und jeweils an zwei nicht benachbarten Längsträger 8 und 12 bzw. 6 und 8 befestigt. Vorliegend sind sie der Länge nach mit den jeweiligen Längsträgern 6, 8, 10, 12 verschweißt. Dabei wird an den Enden der beiden spangenartigen Krafteinleitungsmittel 14 und 17 nach dem Befestigen des Schubdämpfungsteils 5 jeweils eine Traverse 15 bzw. 18 befestigt. Diese stabilisieren das jeweilige Krafteinleitungsmittel 14 bzw. 17 nochmals deutlich und führen auch zu einer vergrößerten Stabilität des Schubdämpfungsteils 5 und des gesamten Bauwerksdämpfers 1. Aufgrund der so erzielten räumlichen Struktur des Schubdämpfungsteils 5 zeigt ein so gestalteter, erfindungsgemäßer Bauwerksdämpfer 1 ein um die Anzahl der Querträger vergrößertes maximales Kraftaufnahmevermögen bei einer in Bezug auf Beulen erheblich verbesserten Stabilität und Belastbarkeit des erfindungsgemä-ßen Bauwerksdämpfers 1 im Vergleich zu einem herkömmlichen SHP-Dämpfer.

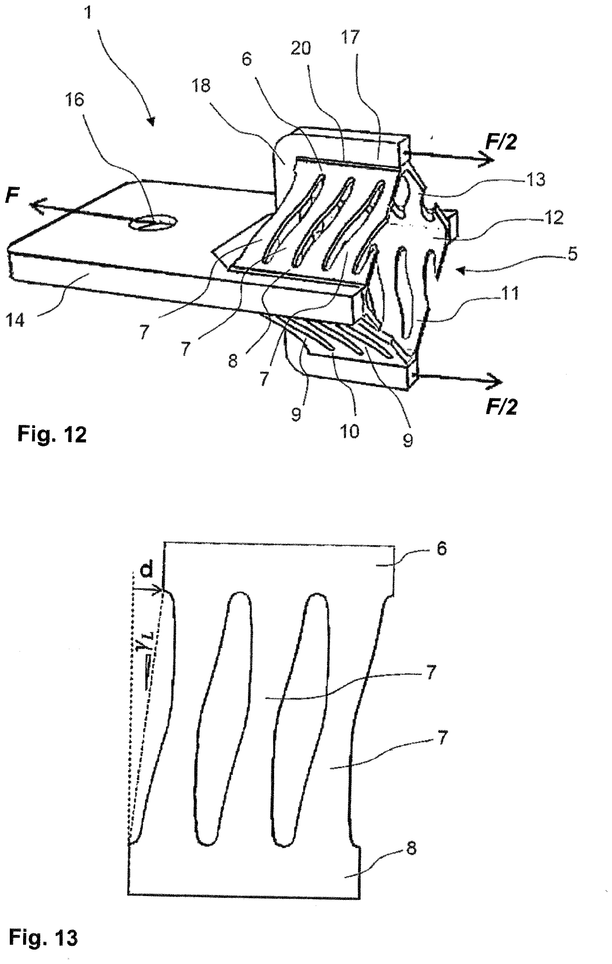

Wie man der räumlichen Schnittdarstellung in Fig. 12 entnehmen kann, wird die in den Bauwerksdämpfer 1 eingeleitete Kraft F über die Bohrung 16 und das Krafteinleitungsmittel 14 in die beiden nichtbenachbarten Längsträger 8 und 12 des Schubdämpfungsteils 5 eingeleitet. Dies führt zu einer Verformung der Querträger 7, 9, 11, 13 und zu einer Reaktionskraft F/2 in den beiden Längsträgern 6 und 10.

In Fig. 13 ist die Verformung der Querträger 7 um das Maß d am Ende und den Winkel *γ* dargestellt.

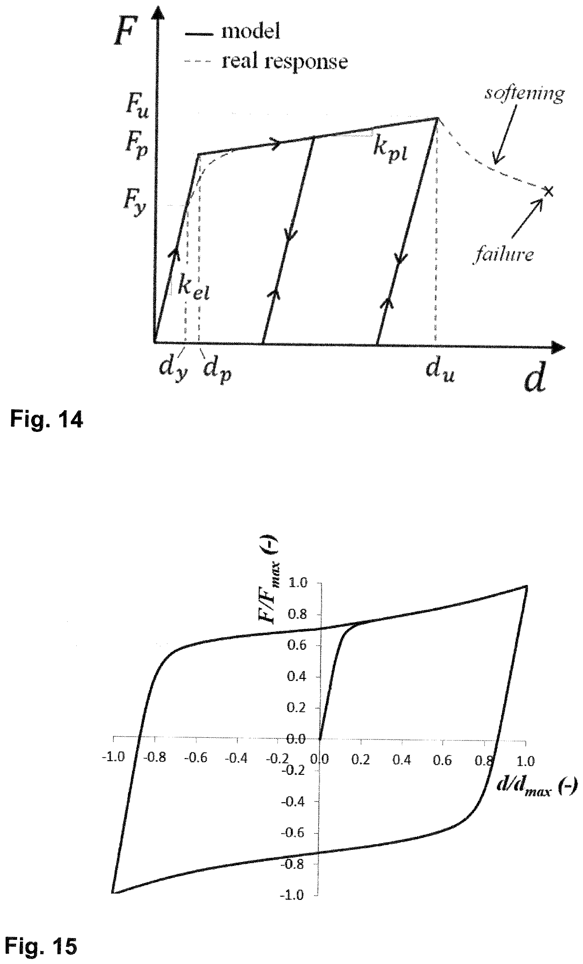

In Fig. 14 ist nun das Verformungsverhalten eines erfindungsgemäßen Bauwerksdämpfers 1 in einem Kraftverformungsdiagramm dargestellt. Dieses kann, wie mit der durchgehenden Linie dargestellt, bilinear vereinfacht werden. Die gepunktete Linie zeigt das tatsächliche Verhalten. Demnach kommt es zunächst zu einer elastischen Verformung bei stark ansteigender Kraft. Wird die als *F_{y}* bezeichneten Kraft erreicht, kommt es zum Fließen der Querträger. Nun kann nur noch wenig mehr Kraft in die Querträger eingeleitet werden. Vereinfacht nimmt man jedoch an, dass bis zum Punkt *Fₚ* noch elastisches Verhalten vorliegt. Ab diesem Punkt kann ein ebenfalls noch lineares Anwachsen der aufnehmbaren Kräfte angenommen werden und zwar bis zum Punkt *Fₘₐₓ.* Ab hier setzt dann ein Erweichen (softening) des Materials (vorliegend Stahl) ein und es kommt bei weiter steigenden Verformungen und abnehmenden Kräften zum Versagen (failure). Daher ist der Bauwerksdämpfer 1 so auszulegen, dass es beim maximalen Lastfall nicht zu einem Überschreiten der Kraft *Fₘₐₓ* kommt.

Das in Fig. 15 gezeigte Kraftverformungsdiagramm zeigt einen vollen Lastzyklus für den in Fig. 11 bis Fig. 13 gezeigten Bauwerksdämpfer 1. Die hier dargestellte Kurve basiert auf einer rechnerischen Simulation. Es kann demnach eine sehr gleichmäßige Hysterese für das Verformungsverhalten des erfindungsgemäß gestalteten Bauwerksdämpfers 1 ermittelt werden.

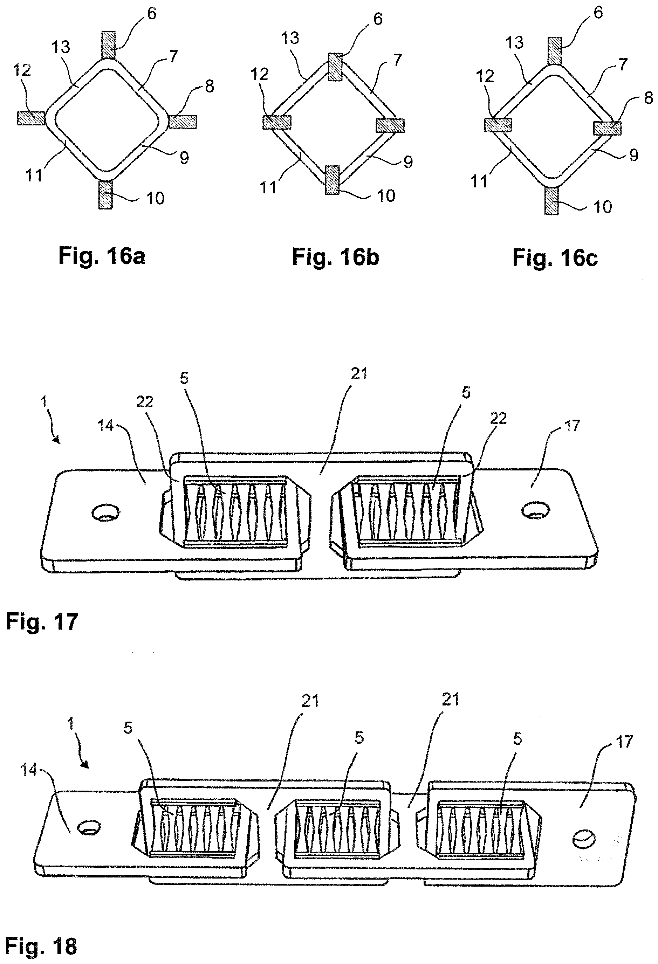

In Fig. 16a, 16b und 16c sind drei weitere Ausführungsbeispiele für erfindungsgemäß gestaltete Schubdämpfungsteile 5 dargestellt, wobei diese sich dadurch auszeichnen, dass sie aus mehreren Einzelteilen zusammengeschweißt worden sind. Beim Ausführungsbeispiel gemäß Fig. 16a handelt es sich um ein Schubdämpfungsteile 5 bei dem zwischen vier Längsträger 6, 8, 10 und 12 mehrere quadratische Ringe parallel eingeschweißt sind, deren Seiten die vier Querträger 7, 9, 11, 13 bilden. Diese Ringe sind aufgrund ihrer quadratischen Form und der an den Längsträgern 6 bzw. 8 angeschweißten Ecken in ihrer Wirkungsweise mit einzelnen Querträgern vergleichbar.

Fig. 16b zeigt eine alternative Ausführungsform, bei der zwischen die vier Längsträger 6, 8, 10, 12 jeweils einzeln streifenförmige Querträger 7, 9, 11, 13 eingeschweißt werden.

Eine dritte Alternative ist in Fig. 16c gezeigt, bei der zwischen die vier Längsträger 6, 8, 10, 12 zwei schmale L-Profile eingesetzt werden und ebenfalls mit diesen verschweißt werden. Die L-Profile bilden jeweils zwei Querträger 7, 13 oder 9, 11 des Schubdämpfungsteils 5. L-Profile lassen sich gut streifenförmig zuschneiden und mit den Längsträgern verschweißen.

Anhand des in Fig. 17 gezeigten sechsten Ausführungsbeispiels eines erfindungsgemäß gestalteten Bauwerksdämpfers 1 soll nun ein weiterer Aspekt der Erfindung erläutert werden, der sich durch die Hintereinanderschaltung zweier Schubdämpfungsteile 5 in einem Bauwerksdämpfer 1 mittels eines ebenfalls plattenförmigen Verbindungsmittels 21 mit an den Enden vorgesehene Traversen 22 erzielen lässt. So kann nämlich durch die Hintereinanderschaltung mehrerer Schubdämpfungsteile 5 eine im Verhältnis zu SHP-Dämpfern um ein Vielfaches größere Dämpfungskonstante *dₘₐₓ* erreicht werden kann. Dies ist nicht trivial.

Durch die Hintereinanderschaltung von mehreren Schubdämpfungsteilen 5 kann eine sehr zielgenaue Anpassung der Dämpfungseigenschaften des erfindungsgemäßen Bauwerksdämpfers 1 erfolgen und dies auf eine sehr wirtschaftliche Weise. Denn die Schubdämpfungsteile 5 können sehr gut vorgefertigt und dann je nach Bedarf miteinander verbunden werden. Beispielsweise ist es denkbar, dass man diese einfach je nach Bedarf ablengt und dann miteinander wie in Fig. 17 dargestellt verkuppelt.

Bei dem in Fig. 18 gezeigten siebten Ausführungsbeispiel kommt es zu einer Hintereinanderschaltung von drei Schubdämpfungsteilen 5 durch Verwendung von zwei um 90 Grad zueinander versetzt angeordneten Verbindungsmitteln 21. Dies erlaubt eine Verdreifachung der zulässigen maximalen Verformung im Vergleich zu einem herkömmlichen gestatteten SHP-Dämpfer.

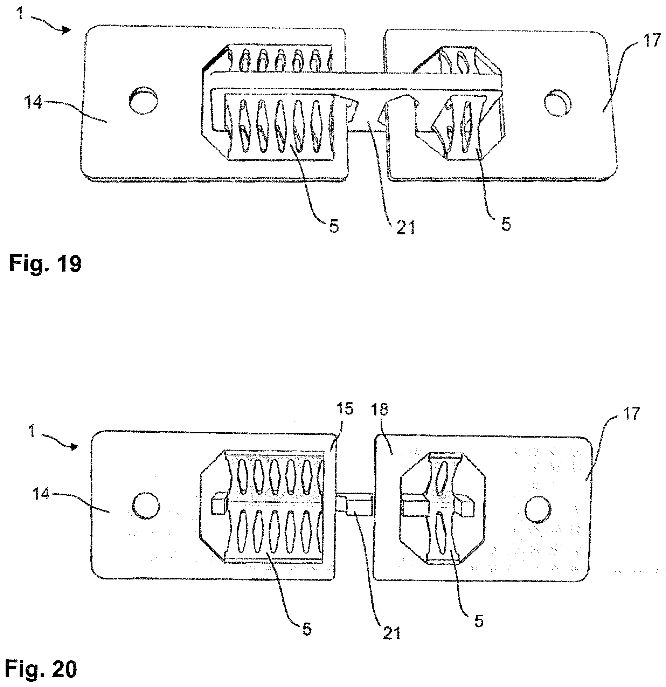

Bei dem in Fig. 19 gezeigten Ausführungsbeispiel werden zwei unterschiedlich ausgestaltete Schubdämpfungsteile 5 miteinander über das Verbindungsmittel 21 verbunden. Diese weisen zwar beiden die gleichen Grundrisse auf, sind aber unterschiedlich lang bzw. haben eine unterschiedliche Anzahl von Querträgern 7, 9, 11, 13. Bei dem in Fig. 19 links gezeigten ersten Schubdämpfungsteil 5 sind sechs Querträgerebenen vorhanden und vier in den Ecken angeordnete Längsträger 6, 8, 10, 12. Bei dem auf der rechten Seite angeordneten zweiten Schubdämpfungsteil 5 sind nur zwei Querträgerebenen vorhanden. Somit weist das links gezeigte Schubdämpfungsteile 5 eine größere Steifigkeit als das rechts dargestellte Schubdämpfungsteil 5 auf.

Die Verbindung beider Schubdämpfungsteile 5 erfolgt über ein im vorliegenden Beispiel plattenartig ausgebildetes Verbindungsmittel 21, das jeweils in seinen Eckpunkten mit den jeweiligen Längsträgern 6, 8, 10, 12 verbunden ist.

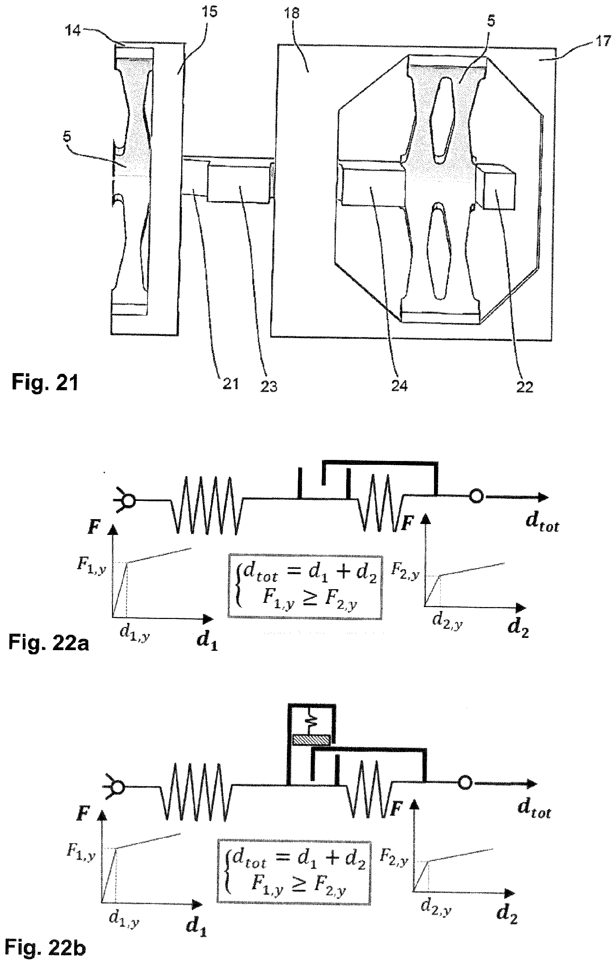

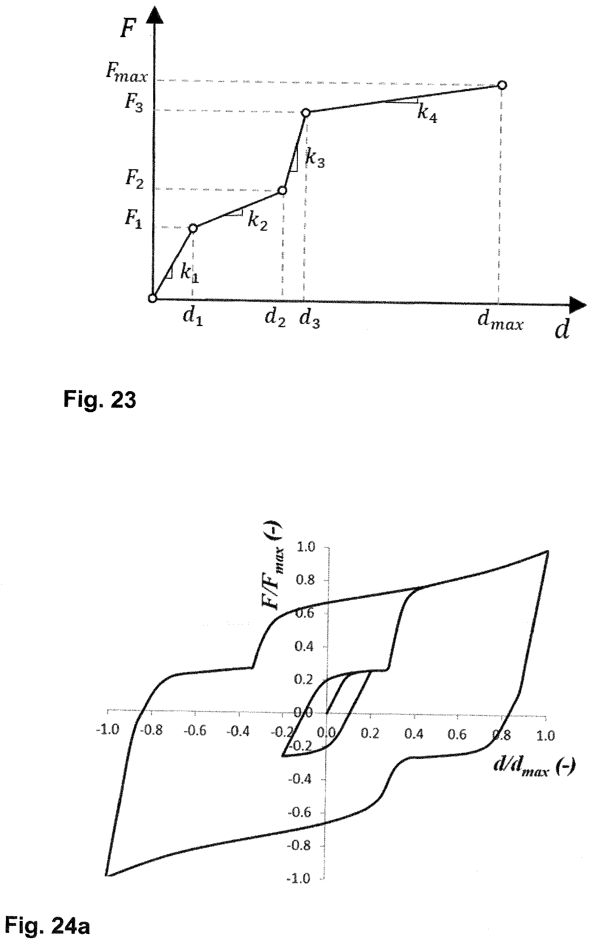

Wie man nun in der Schnittdarstellung Fig. 20 und dem nochmals vergrößerten Ausschnitt gem. Fig 21 erkennen kann, weist das Verbindungsmittel 21 zwei Stege 23 und 24 auf. Diese weisen einen gewissen Abstand zu den Traversen 15 und 18 auf. Dadurch kann das Dämpfungsverhalten des Bauwerksdämpfers 1 gezielt eingestellt werden. So stellt sich das in Fig. 21 gezeigte mechanische System eines aus zwei in Reihe geschalteten Dämpfern ein, bei dem der weichere Dämpfer (in Fig. 22 rechts) einen Anschlag hat, der dann aktiv wird, wenn das weniger Querträger aufweisende rechte Schubdämpfungsteil 5 (in Fig. 19 rechts dargestellt) seine maximale plastische Verformung erreicht. Dann wird über die Stege 23 und 24 das links liegende Schubdämpfungsteil 5 aktiviert, das eine größere Steifigkeit aufweist. Insgesamt stellt sich ein in Fig. 23 vereinfacht linear dargestelltes Verformungsverhalten ein. In rechnerischerer Simulation kann die in Fig. 24a gezeigte Hysterese für die Verformung und das damit einhergehende Dämpfungsverhalten des erfindungsgemäßen Bauwerksdämpfers 1 ermittelt werden.

Die Wirkungsweise des in Fig. 21 gezeigten Verbindungssystems mit Lückenschlussverbindung soll nun anhand des in Fig. 22a dargestellten mechanischen Systems und des in Fig. 23 dargestellten, zugehörigen Kraft-Verformungsdiagramms erläutert werden. Das Lückenschlussverbindungssystem ermöglicht nämlich die Schaffung eines Bauwerksdämpfers 1 mit zwei unterschiedlichen Steifigkeiten, die zu zwei unterschiedlichen jeweils plastische Verformung erzeugenden Kraftlevel, wie sie sich bei unterschiedlichen Erdbebenlasten in einem Bauwerk einstellen können, führen.

Der Bauwerksdämpfer 1 ist also so ausgebildet, dass bei einem kleineren Erdbeben die erzeugte Verformung d geringer als d2 (d<d2) ist. Der Bauwerksdämpfer ist demgemäß weicher und stellt nur eine kleinere Dämpfungskraft zur Verfügung (F<F2). Diese erlaubt ein elastischeres Tragwerk für das Bauwerk. Das sorgt dafür, dass bei kleinen Erdbeben kleinere maximale Beschleunigungen in das Bauwerk eingeleitet werden. Dies ist eine im Vergleich zu herkömmlichen SHP- und BRB-Dämpfern bedeutende und nicht triviale Verbesserung des erfindungsgemäßen Bauwerksdämpfers 1. Es ermöglicht einen deutlich verbesserten Schutz der nicht-strukturellen bzw. tragenden Teile des Bauwerks, wie etwa der elektrischen Ausrüstung oder der Inneneinrichtung.

Bei großen Erdbeben stellen sich größere Verformungen im Bauwerk ein (d>d3). Nun ist der erfindungsgemäße Dämpfer 1 in der Lage auch eine größere Dämpfungskraft (F3<F<Fmax) zur Verfügung zu stellen. Auch ist die Steifigkeit nun deutlich größer, was dazu führt, dass das Bauwerk besser vor Versagen geschützt ist.

Fig. 24a zeigt die Hystereseschleife des Bauwerksdämpfers 1. Dabei entspricht die innere Schleife dem Verhalten im Fall eines kleinen Erdbebens, während der äußere Teil der Schleife das Verhalten im Falle eines großen Erdbebens zeigt.

Fig. 22b zeigt das mechanische System einer alternativen Ausführungsform eines erfindungsgemäßen Bauwerksdämpfers 1. Dieses unterscheidet sich von dem der Fig.22a dadurch, dass hier der Bauwerksdämpfer 1 noch zusätzlich ein Schließsystem für das links im Bild gezeigte Schubdämpfungsteil 5 aufweist. Dieses sorgt dafür, dass wenn die Verformung d zum ersten Mal d (d>d2) überschreitet, das Schubdämpfungsteil 5 sich nicht mehr verformen kann. Nun trägt nur noch das im System rechts eingezeichnete Schubdämpfungsteil 5 zur Dämpfung des Erdbebens bei.

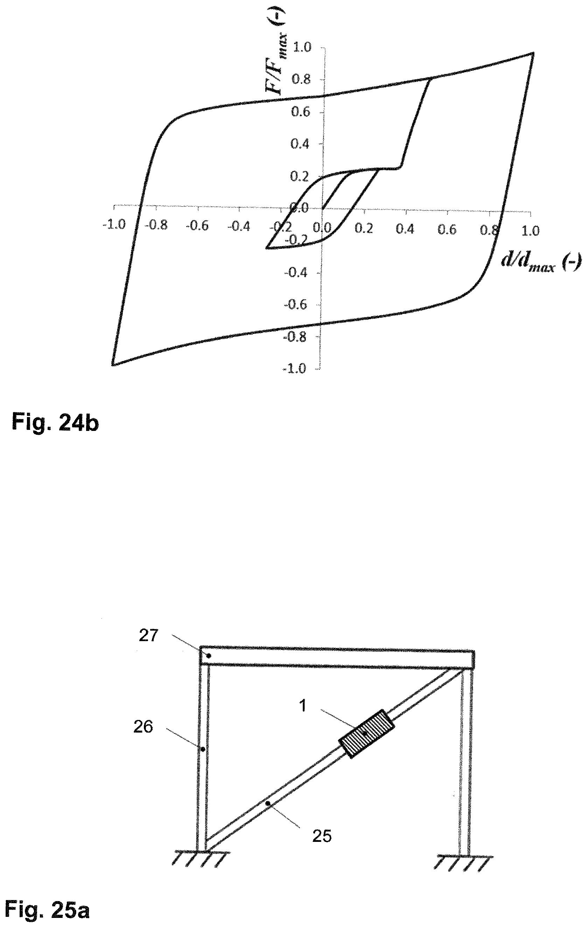

Fig. 24b zeigt die Hystereseschleife eines gemäß Fig. 22b aufgebauten Bauwerksdämpfers 1, wobei die innere Schleife wieder dem Verhalten im Fall eines kleinen Erdbebens entspricht, während der äu-ßere Teil der Schleife das Verhalten im Falle eines großen Erdbebens zeigt. Wie man insbesondere durch Vergleich mit der Kurve in Fig. 24a entnehmen kann, ermöglicht diese Ausführungsform es, die Gesamtmenge der zu dissipierenden Energie (dies entspricht der Fläche innerhalb die Hysteresekurve) zu vergrößern. Dies folgt aus der ggeenüber Fig 24a deutlich glatteren Kurve bei großen Erdbebenlasten. Diese Ausführungsform führt folglich zu einem besseren Schutz des Bauwerks während großer bzw. schwerer Erdbeben bei annähernd gleich gutem Dämpfungsverhalten bei kleinen Erdenbeben.

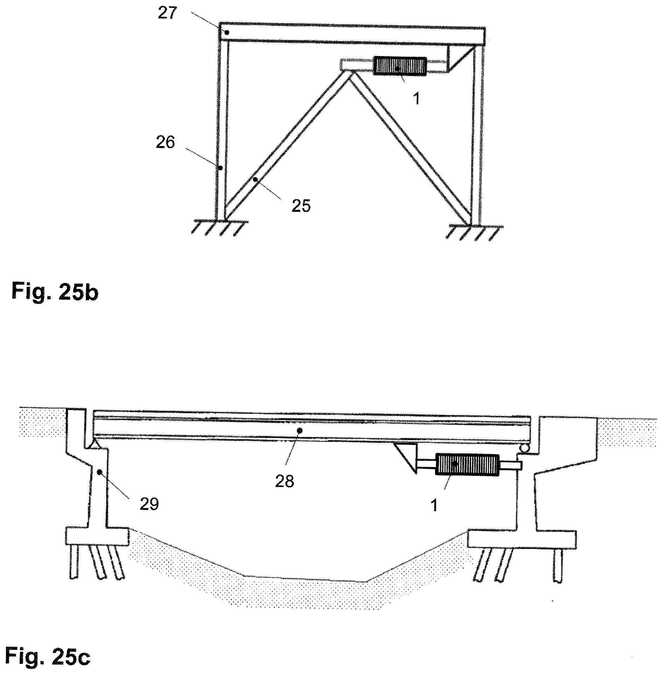

In den Fig. 25 sind drei Beispiele gezeigt, wie ein erfindungsgemäßer Bauwerksdämpfer 1 in einem Bauwerk eingebaut werden kann. Dabei zeigt Fig. 25a ein Bauwerk mit einem Fachwerkträger 25 an dem der Bauwerksdämpfer 1 befestigt ist. Ferner weist das Bauwerk zwei vertikale Stützen 26 auf, auf denen eine Deckenscheibe 27 ruht. Kommt es zu einem Erdbeben, stellen sich aufgrund der dem Bauwerk aufgezwungenen Bewegungen des Untergrundes Normalkräfte im Fachwerkträger 25 einstellen. Die vom Bauwerksdämpfer 1 gedämpft werden.

Fig. 25b zeigt ein zweites Beispiel wie ein erfindungsgemäßer Bauwerksdämpfer in einem Bauwerk eingebaut werden kann. Hier ist der Bauwerksdämpfer 1 wie ein Fachwerkstab zwischen einem Knotenpunkt zweier Fachwerkträger 25 und der Deckenscheibe 27 befestigt. Auch hier werden nur Normalkräfte in den Bauwerksdämpfer eingeleitet.

Fig. 25c zeigt ein drittes Beispiel wie ein erfindungsgemäßer Bauwerksdämpfer 1 in einem Bauwerk eingebaut werden kann. Das Bauwerk ist vorliegend eine Brücke bei der der Bauwerksdämpfer 1 zwischen dem Brückendeck 28 und einem Widerlager 29 befestigt ist. Die Befestigung erfolgt auch hier zwingend so, dass nur Normalkräfte in den Bauwerksdämpfer 1 eingeleitet werden.

### Bezugszeichenliste

- 1.: Bauwerksdämpfer
- 2.: Stahlträger
- 3.: Mörtel
- 4.: Hüllrohr
- 5.: Schubdämpfungsteil
- 6.: erster Längsträger
- 7.: Querträger der ersten Ausrichtung
- 8.: zweiter Längsträger
- 9.: Querträger der zweiten Ausrichtung
- 10.: dritter Längsträger
- 11.: Querträger der dritten Ausrichtung
- 12.: vierter Längsträger
- 13.: Querträger der vierten Ausrichtung
- 14.: erstes Krafteinleitungsmittel
- 15.: Traverse des ersten Krafteinleitungsmittels
- 16.: Bohrung des ersten Krafteinleitungsmittels
- 17.: zweites Krafteinleitungsmittel
- 18.: Traverse des zweiten Krafteinleitungsmittels
- 19.: Bohrung des ersten Krafteinleitungsmittels
- 20.: Schweißnaht
- 21.: Verbindungsmittel
- 22.: Traverse des Verbindungsmittels
- 23.: Erster Steg
- 24.: Zweiter Steg
- 25.: Fachwerkträger
- 26.: Stütze
- 27.: Deckenscheibe
- 28.: Brückendeck
- 29.: Widerlager

## Patentansprüche

1. Bauwerksdämpfer (1) mit wenigstens einem zumindest bereichsweise leiterartig ausgebildeten Schubdämpfungsteil (5) das wenigstens zwei Längsträger (6, 8) aufweist, die über wenigstens zwei in einer ersten Ausrichtung parallel zueinander ausgerichtete, sprossenartige Querträger (7) miteinander verbunden sind, wobei die sprossenartigen Querträger (7) jeweils an ihren Enden biegesteif mit den Längsträgern (6, 8) verbunden sind,
das Schubdämpfungsteil (5) eine räumliche Struktur aufweist, bei der wenigstens zwei weitere sich parallel zueinander erstreckende, sprossenartige Querträger (9) in einer von der ersten Ausrichtung abweichenden zweiten Ausrichtung angeordnet sind, und
wenigstens ein Schubdämpfungsteil (5) wenigstens ein Krafteinleitungsmittel (14, 17) aufweist, **dadurch gekennzeichnet, dass**
wenigstens ein Krafteinleitungsmittel (14, 17) als u-förmige Platte mit zwei parallelen Schenkeln ausgestaltet ist, dessen Schenkel das Schubdämpfungsteil (5) seitlich umfassen und an dessen äußeren Schenkelenden zum Verschluss der u-förmigen Ausnehmung eine die beiden Schenkelenden verbindende Traverse (15, 18) angeordnet ist.

2. Bauwerksdämpfer nach einem der vorhergehenden Ansprüche;
**dadurch gekennzeichnet, dass**
das Schubdämpfungsteil (5) mehrere Querträger-Ebenen mit wenigstens einem darin angeordneten Querträger (7, 9, 11, 13) aufweist, wobei die Querträger-Ebenen entlang der Längsachse des Schubdämpfungsteils (5) parallel beabstandet angeordnet sind.

3. Bauwerksdämpfer nach einem der vorhergehenden Ansprüche;
**dadurch gekennzeichnet, dass**
in jeder Querträger-Ebene wenigstens zwei Querträger (7, 9, 11, 13) angeordnet sind, von denen zumindest ein Querträger (7) sich in einer ersten Ausrichtung und ein weiterer Querträger (9, 11, 13) in einer von der ersten Ausrichtung abweichenden zweiten Ausrichtung erstreckt.

4. Bauwerksdämpfer nach einem der vorhergehenden Ansprüche;
**dadurch gekennzeichnet, dass**
mehrere Querträger-Ebenen im gleichen Abstand zueinander entlang der Längsachse des Schubdämpfungsteils (5) angeordnet sind.

5. Bauwerksdämpfer nach einem der vorhergehenden Ansprüche;
**dadurch gekennzeichnet, dass**
im Schubdämpfungsteil (5) mindestens zwei Querträger-Ebenen mit jeweils wenigstens zwei, vorzugsweise vier, darin angeordneten Querträger(n) (7, 9, 11, 13) vorgesehen sind.

6. Bauwerksdämpfer nach einem der vorhergehenden Ansprüche;
**dadurch gekennzeichnet, dass**
das Schubdämpfungsteil (5) zumindest teilweise aus Metall, vorzugsweise aus Stahl, besteht.

7. Bauwerksdämpfer nach einem der vorhergehenden Ansprüche;
**dadurch gekennzeichnet, dass**
wenigstens ein, vorzugsweise alle, Querträger (7, 9, 11, 13) eine zu beiden Enden hin zunehmende Trägerhöhe aufweist.

8. Bauwerksdämpfer nach einem der vorhergehenden Ansprüche;
**dadurch gekennzeichnet, dass**
das Schubdämpfungsteil (5) einen in Draufsicht auf seine Längsachse symmetrischen, mehreckigen und/oder runden Grundriss aufweist.

9. Bauwerksdämpfer nach einem der vorhergehenden Ansprüche;
**dadurch gekennzeichnet, dass**
das Schubdämpfungsteil (5) wenigstens drei, vorzugsweise vier, Längsträger (6, 8, 10, 12) aufweist.

10. Bauwerksdämpfer nach einem der vorhergehenden Ansprüche;
**dadurch gekennzeichnet, dass**
das Schubdämpfungsteil (5) einen in der Draufsicht mehreckigem Grundriss aufweist in dessen Ecken jeweils ein Längsträger (6, 8, 10, 12) angeordnet ist.

11. Bauwerksdämpfer nach einem der vorhergehenden Ansprüche;
**dadurch gekennzeichnet, dass**
die Längsträger (6,8, 10, 12) und die Querträger (7, 9, 11, 13) des Schubdämpfungsteils (5) miteinander verschweißt sind.

12. Bauwerksdämpfer nach einem der vorhergehenden Ansprüche;
**dadurch gekennzeichnet, dass**
das Schubdämpfungsteil (5) zumindest eine längliche Wandplatte aufweist, die mehrere parallele und quer zur Längsachse der Wandplatte verlaufende Schlitze aufweist.

13. Bauwerksdämpfer nach einem der vorhergehenden Ansprüche;
**dadurch gekennzeichnet, dass**
das Schubdämpfungsteil (5) mehrere in Draufsicht auf seine Längsachse zueinander angewinkelt angeordnete mehrfach geschlitzte Wandplatten aufweist.

14. Bauwerksdämpfer nach einem der vorhergehenden Ansprüche;
**dadurch gekennzeichnet, dass**
das Schubdämpfungsteil (5) ein Rohr aufweist, bei dem in wenigstens einer Rohrwand mehrere parallele und quer zur Längsachse des Rohres verlaufende Schlitze so angeordnet und ausgeführt sind, dass in Längsrichtung des Rohres wenigstens zwei durchgehende Wandabschnitte vorhanden sind, die die Längsträger (6, 8, 10, 12) des Schubdämpfungsteils (5) bilden, während die quer zur Rohrlängsachse verlaufenden Wandabschnitte zwischen den Schlitzen die sprossenartigen Querträger (7, 9, 11, 13) bilden.

15. Bauwerksdämpfer nach einem der vorhergehenden Ansprüche;
**dadurch gekennzeichnet, dass**
wenigstens eine Rohrwand zumindest teilweise eben und/oder gekrümmt ausgeführt ist.

16. Bauwerksdämpfer nach einem der vorhergehenden Ansprüche;
**dadurch gekennzeichnet, dass**
das Rohr einen in Draufsicht auf seine Längsachse runden und/oder mehreckigen Querschnitt hat.

17. Bauwerksdämpfer nach einem der vorhergehenden Ansprüche;
**dadurch gekennzeichnet, dass**
wenigstens ein Schubdämpfungsteil (5) wenigstens ein spangenartig ausgebildetes Krafteinleitungsmittel (14, 17) aufweist.

18. Bauwerksdämpfer nach einem der vorhergehenden Ansprüche;
**dadurch gekennzeichnet, dass**
wenigstens ein Krafteinleitungsmittel (14, 17) zwei nicht benachbarte Längsträger (6, 10; 8, 12) eines Schubdämpfungsteils (5) verbindet.

19. Bauwerksdämpfer nach einem der vorhergehenden Ansprüche;
**dadurch gekennzeichnet, dass**
wenigstens ein erstes Krafteinleitungsmittel (14) an zwei nicht benachbarten Längsträgern (6, 10; 8, 12) befestigt ist.

20. Bauwerksdämpfer nach einem der vorhergehenden Ansprüche;
**dadurch gekennzeichnet, dass**
wenigstens ein Krafteinleitungsmittel (14, 17) ein Befestigungsmittel, vorzugsweise eine Bohrung (16, 19), zur Befestigung des Bauwerksdämpfers (1) an einem Bauwerk aufweist, wobei die Bohrung (16, 19) auf der der Traverse (6, 8, 10, 12) gegenüberliegenden Seite des Krafteinleitungsmittels (14, 17) angeordnet ist.

21. Bauwerksdämpfer nach einem der vorhergehenden Ansprüche;
**dadurch gekennzeichnet, dass**
wenigstens zwei Schubdämpfungsteile (5) miteinander mittels wenigstens eines Verbindungsmittels (21) verbunden sind.

22. Bauwerksdämpfer nach einem der vorhergehenden Ansprüche;
**dadurch gekennzeichnet, dass**
wenigstens ein Schubdämpfungsteil (5) ein von dem oder den anderen Schubdämpfungsteil(en) (5) abweichende Dämpfungswirkung aufweist, insbesondere deshalb, weil es eine abweichende Zahl von Querträgern (7, 9, 11, 13) aufweist.

23. Bauwerksdämpfer nach einem der vorhergehenden Ansprüche;
**dadurch gekennzeichnet, dass**
wenigstens zwei unterschiedlich steife Schubdämpfungsteile (5) so miteinander verbunden sind, dass bei einem kleinen Erdbeben nur das weniger steife Schubdämpfungsteile (5) aktiviert wird und bei einem großen Erdbeben sowohl das steifere wie auch das weniger steife Schubdämpfungsteil (5) aktiviert werden.

24. Bauwerksdämpfer nach einem der vorhergehenden Ansprüche;
**dadurch gekennzeichnet, dass**
wenigstens zwei unterschiedlich steife Schubdämpfungsteile (5) so miteinander verbunden sind, dass bei einem kleinen Erdbeben nur das weniger steife Schubdämpfungsteile (5) aktiviert wird und bei einem großen Erdbeben nur das steifere Schubdämpfungsteil (5) aktiviert wird.

25. Bauwerksdämpfer nach einem der vorhergehenden Ansprüche;
**dadurch gekennzeichnet, dass**
wenigstens ein Verbindungsmittel (21) ein Schließsystem zur Begrenzung und/oder Unterdrückung von Bewegungen wenigstens eines in ihm angeordneten Schubdämpfungsteils (5) aufweist.

26. Bauwerksdämpfer nach einem der vorhergehenden Ansprüche;
**dadurch gekennzeichnet, dass**
das Verbindungsmittel (21) zwei u-förmige Ausnehmungen aufweist, deren Schenkel jeweils ein Schubdämpfungsteil (5) seitlich umfassen und an dessen Schenkelenden jeweils eine die beiden äußeren Schenkelenden verbindende Traverse (22) angeordnet ist.

27. Bauwerksdämpfer nach einem der vorhergehenden Ansprüche;
**dadurch gekennzeichnet, dass**
wenigstens eine Längsseite eines Längsträgers (7, 9, 11, 13) eines Schubdämpfungsteils (5) mit wenigstens einem Schenkel eines Krafteinleitungsmittels (14, 17) und/oder eines Verbindungsmittels (21) der Länge nach verschweißt ist.

## Claims

1. Construction damper (1) with at least one at least in regions ladder-like constructed thrust damping part (5) which has at least two longitudinal beams (6, 8) which are connected to each other by at least two rung-like transverse beams (7) which are aligned parallel to each other in a first alignment, wherein the rung-like transverse beams (7) at their ends are each connected to the longitudinal beams (6, 8) in a bending-rigid manner,
the thrust damping part (5) has a spatial structure in which at least two further rung-like transverse beams (9) extending parallel to each other are arranged in a second alignment deviating from the first alignment, and
at least one thrust damping part (5) has at least one force introduction means (14, 17), **characterized in that**
at least one force introduction means (14, 17) is constructed as a u-shaped plate with two parallel legs, the legs of which laterally encompass the thrust damping part (5) and at the outer leg ends of which a traverse (15, 18) connecting the two leg ends is arranged for closing the u-shaped recess.

2. Construction damper according to any one of the preceding claims;
**characterized in that**
the thrust damping part (5) has several transverse beam planes with at least one transverse beam (7, 9, 11, 13) arranged therein, wherein the transverse beam planes are arranged parallel spaced apart along the longitudinal axis of the thrust damping part (5).

3. Construction damper according to any one of the preceding claims;
**characterized in that**
at least two transverse beams (7, 9, 11, 13) are arranged in each transverse beam plane, of which at least one transverse beam (7) extends in a first alignment and one further transverse beam (9, 11, 13) extends in a second alignment deviating from the first alignment.

4. Construction damper according to any one of the preceding claims;
**characterized in that**
several transverse beam planes are arranged at the same distance from each other along the longitudinal axis of the thrust damping part (5).

5. Construction damper according to any one of the preceding claims;
**characterized in that**
at least two transverse beam planes each with at least two, preferably four, transverse beams (7, 9, 11, 13) arranged therein are provided in the thrust damping part (5).

6. Construction damper according to any one of the preceding claims;
**characterized in that**
the thrust damping part (5) is at least partly made of metal, preferably of steel.

7. Construction damper according to any one of the preceding claims;
**characterized in that**
at least one, preferably all, transverse beam(s) (7, 9, 11, 13) has a beam height which increases towards both ends.

8. Construction damper according to any one of the preceding claims;
**characterized in that**
the thrust damping part (5) has a symmetrical, polygonal and/or round ground plan in plan view of its longitudinal axis.

9. Construction damper according to any one of the preceding claims;
**characterized in that**
the thrust damping part (5) has at least three, preferably four, longitudinal beams (6, 8, 10, 12).

10. Construction damper according to any one of the preceding claims;
**characterized in that**
the thrust damping part (5) has a polygonal ground plan in plan view, in each of the corners of which one longitudinal beam (6, 8, 10, 12) is arranged.

11. Construction damper according to any one of the preceding claims;
**characterized in that**
the longitudinal beams (6, 8, 10, 12) and the transverse beams (7, 9, 11, 13) of the thrust damping part (5) are welded to each other.

12. Construction damper according to any one of the preceding claims;
**characterized in that**
the thrust damping part (5) has at least one elongated wall plate having several parallel slots extending transversely to the longitudinal axis of the wall plate.

13. Construction damper according to any one of the preceding claims;
**characterized in that**
the thrust damping part (5) has several multiple slotted wall plates arranged at an angle to each other in plan view of its longitudinal axis.

14. Construction damper according to any one of the preceding claims;
**characterized in that**
the thrust damping part (5) has a tube, in which in at least one tube wall several parallel slots extending transversely to the longitudinal axis of the tube are arranged and constructed in such a way that in the longitudinal direction of the tube there are at least two continuous wall sections which form the longitudinal beams (6, 8, 10, 12) of the thrust damping part (5), while the wall sections extending transversely to the longitudinal axis of the tube between the slots form the rung-like transverse beams (7, 9, 11, 13).

15. Construction damper according to any one of the preceding claims;
**characterized in that**
at least one tube wall is at least partially flat and/or curved.

16. Construction damper according to any one of the preceding claims;
**characterized in that**
the tube has a round and/or polygonal cross-section in plan view of its longitudinal axis.

17. Construction damper according to any one of the preceding claims;
**characterized in that**
at least one thrust damping part (5) has at least one claps-like constructed force introduction means (14, 17).

18. Construction damper according to any one of the preceding claims;
**characterized in that**
at least one force introduction means (14, 17) connects two non-adjacent longitudinal beams (6, 10, 8, 12) of one thrust damping part (5).

19. Construction damper according to any one of the preceding claims;
**characterized in that**
at least one first force introduction means (14) is attached to two non-adjacent longitudinal beams (6, 10; 8, 12).

20. Construction damper according to any one of the preceding claims;
**characterized in that**
at least one force introduction means (14, 17) has a fastening means, preferably a bore (16, 19), for fastening the construction damper (1) to a construction, wherein the bore (16, 19) is arranged on the side of the force introduction means (14, 17) opposite the traverse (6, 8, 10, 12).

21. Construction damper according to any one of the preceding claims;
**characterized in that**
at least two thrust damping parts (5) are connected to each other by means of at least one connecting means (21).

22. Construction damper according to any one of the preceding claims;
**characterized in that**
at least one thrust damping part (5) has a damping effect which differs from the other thrust damping part(s) (5), in particular because it has a different number of transverse beams (7, 9, 11, 13).

23. Construction damper according to any one of the preceding claims;
**characterized in that**
at least two differently rigid thrust damping parts (5) are connected to each other in such a way that in case of a small earthquake only the less rigid thrust damping part (5) is activated and in case of a large earthquake both the more rigid and the less rigid thrust damping part (5) are activated.

24. Construction damper according to any one of the preceding claims;
**characterized in that**
at least two differently rigid thrust damping parts (5) are connected to each other in such a way that in case of a small earthquake only the less rigid thrust damping part (5) is activated and in case of a large earthquake only the more rigid thrust damping part (5) is activated.

25. Construction damper according to any one of the preceding claims;
**characterized in that**
at least one connecting means (21) has a locking system for limiting and/or suppressing movements of at least one thrust damping part (5) arranged therein.

26. Construction damper according to any one of the preceding claims;
**characterized in that**
the connecting means (21) has two u-shaped recesses, the legs of which each laterally encompass one thrust damping part (5) and at each of the leg ends of which there is arranged a traverse (22) connecting the two outer leg ends.

27. Construction damper according to any one of the preceding claims;
**characterized in that**
at least one longitudinal side of one longitudinal beam (7, 9, 11, 13) of one thrust damping part (5) is welded longitudinally to at least one leg of one force introduction means (14, 17) and/or one connecting means (21).

## Revendications

1. Amortisseur de bâtiment (1) comprenant au moins un élément d'amortissement de poussée (5) qui est réalisé au moins en partie sous forme d'échelle et qui comprend au moins deux poutres longitudinales (6, 8) qui sont reliées l'une à l'autre par au moins deux poutres transversales (7) en forme de tiges orientées parallèles entre elles dans une première orientation, lesdites poutres transversales (7) en forme de tiges étant respectivement reliées sur leurs extrémités aux poutres longitudinales (6, 8) de façon résistante à la flexion,
ledit élément d'amortissement de poussée (5) présentant une structure tridimensionnelle dans laquelle sont disposées au moins deux autres poutres transversales (9) en forme de tiges orientées parallèles entre elles dans une deuxième orientation différant de la première orientation, et
au moins un des éléments d'amortissement de poussée (5) comprenant au moins un organe d'introduction de force (14, 17),
**caractérisé en ce que**
au moins un organe d'introduction de force (14, 17) est configuré sous forme de plaque en u à deux branches parallèles, lesdites branches entourant latéralement ledit élément d'amortissement de poussée (5) et sur les extrémités extérieures desdites branches étant disposé une traverse (15, 18) reliant les deux extrémités des branches pour fermer l'évidement en forme de u.

2. Amortisseur de bâtiment selon l'une quelconque des revendications précédentes, **caractérisé en ce que**
ledit élément d'amortissement de poussée (5) comprend plusieurs plans de poutres transversales comportant au moins une poutre transversale (7, 9, 11, 13) disposée respectivement dans ceux-ci, les plans de poutres transversales étant disposés en parallèle et espacés le long de l'axe longitudinal dudit élément d'amortissement de poussée (5).

3. Amortisseur de bâtiment selon l'une quelconque des revendications précédentes, **caractérisé en ce que**
dans chaque plan de poutres transversales sont disposées au moins deux poutres transversales (7, 9, 11, 13) dont au moins une poutre transversale (7) s'étend dans une première orientation et une autre poutre transversale (9, 11, 13) s'étend dans une deuxième orientation différant de la première orientation.

4. Amortisseur de bâtiment selon l'une quelconque des revendications précédentes, **caractérisé en ce que**
plusieurs plans de poutres transversales sont disposés à une distance égale entre elles le long de l'axe longitudinal dudit élément d'amortissement de poussée (5).

5. Amortisseur de bâtiment selon l'une quelconque des revendications précédentes, **caractérisé en ce que**
dans ledit élément d'amortissement de poussée (5) sont prévues au moins deux plans de poutres transversales comportant respectivement au moins deux, de préférence quatre, poutres transversales (7, 9, 11, 13) dispose dans ceux-ci.

6. Amortisseur de bâtiment selon l'une quelconque des revendications précédentes, **caractérisé en ce que**
ledit élément d'amortissement de poussée (5) est constitué au moins en partie de métal, de préférence d'acier.

7. Amortisseur de bâtiment selon l'une quelconque des revendications précédentes, **caractérisé en ce que**
au moins une, de préférence toutes les poutres transversales (7, 9, 11, 13) présentent une hauteur de poutre croissante vers les deux extrémités.

8. Amortisseur de bâtiment selon l'une quelconque des revendications précédentes, **caractérisé en ce que**
ledit élément d'amortissement de poussée (5) présente, vu de dessus sur son axe longitudinal, un contour symétrique en forme polygonal et/ou circulaire.

9. Amortisseur de bâtiment selon l'une quelconque des revendications précédentes, **caractérisé en ce que**
ledit élément d'amortissement de poussée (5) comprend au moins trois, de préférence quatre, poutres longitudinales (6, 8, 10, 12).

10. Amortisseur de bâtiment selon l'une quelconque des revendications précédentes, **caractérisé en ce que**
ledit élément d'amortissement de poussée (5) présente, vu de dessus, un contour en forme polygonal dans les coins duquel est disposé respectivement une poutre longitudinale (6, 8, 10, 12).

11. Amortisseur de bâtiment selon l'une quelconque des revendications précédentes, **caractérisé en ce que**
les poutres longitudinales (6, 8, 10, 12) et les poutres transversales (7, 9, 11, 13) dudit élément d'amortissement de poussée (5) sont soudées les unes aux autres.

12. Amortisseur de bâtiment selon l'une quelconque des revendications précédentes, **caractérisé en ce que**
ledit élément d'amortissement de poussée (5) comprend au moins une plaque de paroi allongée présentant plusieurs fentes s'étendant en parallèle et transversale à l'axe longitudinal de la plaque de paroi.

13. Amortisseur de bâtiment selon l'une quelconque des revendications précédentes, **caractérisé en ce que**
ledit élément d'amortissement de poussée (5) comprend plusieurs plaques de paroi à fentes multiples qui sont, vu de dessus sur son axe longitudinal, disposées en angle les unes par rapport aux autres.

14. Amortisseur de bâtiment selon l'une quelconque des revendications précédentes, **caractérisé en ce que**
ledit élément d'amortissement de poussée (5) comprend un tube dans lequel, dans au moins une paroi de tube, des fentes qui s'étendent en parallèle et transversalement à l'axe longitudinal du tube sont disposées et réalisées de façon que, en direction longitudinale du tube, au moins deux sections de paroi continues existent qui forment les poutres longitudinales (6, 8, 10, 12) dudit élément d'amortissement de poussée (5) tandis que les sections de paroi s'étendant transversalement à l'axe longitudinal du tube entre les fentes forment les poutres transversales (7, 9, 11, 13) en forme de tiges.

15. Amortisseur de bâtiment selon l'une quelconque des revendications précédentes, **caractérisé en ce que**
au moins une paroi de tube est réalisée, au moins en partie, en forme plate ou courbée.

16. Amortisseur de bâtiment selon l'une quelconque des revendications précédentes,
**caractérisé en ce que**
le tube présente, vu de dessus sur son axe longitudinal, une section transversale en forme circulaire et/ou polygonal.

17. Amortisseur de bâtiment selon l'une quelconque des revendications précédentes, **caractérisé en ce que**
au moins un élément d'amortissement de poussée (5) comprend au moins un organe d'introduction de force (14, 17) réalisé en forme d'agrafe.

18. Amortisseur de bâtiment selon l'une quelconque des revendications précédentes, **caractérisé en ce que**
au moins un organe d'introduction de force (14, 17) connecte deux poutres longitudinales (6, 10 ; 8, 12) non adjacentes d'un élément d'amortissement de poussée (5).

19. Amortisseur de bâtiment selon l'une quelconque des revendications précédentes, **caractérisé en ce que**
au moins un premier organe d'introduction de force (14, 17) est connecté à deux poutres longitudinales (6, 10 ; 8, 12) non adjacentes.

20. Amortisseur de bâtiment selon l'une quelconque des revendications précédentes, **caractérisé en ce que**
au moins un organe d'introduction de force (14, 17) comprend des moyens de fixation, de préférence un alésage (16, 19), pour fixer l'amortisseur de bâtiment (1) sur un bâtiment, ledit alésage (16, 19) étant disposé sur le côté de l'organe d'introduction de force (14, 17) qui est opposé à la traverse (6, 8, 10, 12).

21. Amortisseur de bâtiment selon l'une quelconque des revendications précédentes, **caractérisé en ce que**
au moins deux éléments d'amortissement de poussée (5) sont connectés l'un à autre par au moins un organe de connexion (21).

22. Amortisseur de bâtiment selon l'une quelconque des revendications précédentes, **caractérisé en ce que**
au moins un élément d'amortissement de poussée (5) a un effet d'amortissement différent de celui de l'autre ou des autres élément(s) d'amortissement de poussée (5), en particulier à cause du fait qu'il comprend un nombre différent de poutres transversales (7, 9, 11, 13).

23. Amortisseur de bâtiment selon l'une quelconque des revendications précédentes, **caractérisé en ce que**
au moins deux éléments d'amortissement de poussée (5) de raideur différente sont connectés l'un à l'autre de façon que lors d'un tremblement de terre faible seulement l'élément d'amortissement de poussée (5) de raideur inférieure est activé et lors d'un tremblement de terre fort l'élément d'amortissement de poussée (5) de raideur supérieure et celui de raideur inférieure sont tous les deux activés.

24. Amortisseur de bâtiment selon l'une quelconque des revendications précédentes, **caractérisé en ce que**
au moins deux éléments d'amortissement de poussée (5) de raideur différente sont connectés l'un à l'autre de façon que lors d'un tremblement de terre faible seulement l'élément d'amortissement de poussée (5) de raideur inférieure est activé et lors d'un tremblement de terre fort seulement l'élément d'amortissement de poussée (5) de raideur supérieure est activé.

25. Amortisseur de bâtiment selon l'une quelconque des revendications précédentes, **caractérisé en ce que**
au moins un organe de connexion (21) comprend un système de verrouillage pour limiter et/ou supprimer des déplacements d'au moins un élément d'amortissement de poussée (5) disposé dans celui-ci.

26. Amortisseur de bâtiment selon l'une quelconque des revendications précédentes, **caractérisé en ce que**
ledit organe de connexion (21) comprend deux évidements en forme de u dont les branches respectivement entourent latéralement un élément d'amortissement de poussée (5) et sur les extrémités de branche duquel est respectivement disposé une traverse (22) reliant les deux extrémités extérieures de branche.

27. Amortisseur de bâtiment selon l'une quelconque des revendications précédentes, **caractérisé en ce que**
au moins un côté longitudinal d'une poutre transversale (7, 9, 11, 13) d'un élément d'amortissement de poussée (5) est soudé, dans le sens de la longueur, sur au moins une branche d'un organe d'introduction de force (14, 17) et/ou un organe de connexion (21).
